# EUROPEAN PATENT APPLICATION

(11) **EP 4 819 682 A1**
(43) Date of publication of application: **07.10.2026**
(21) Application number: 23959945.9
(22) Date of filing: 01.12.2023
(51) Int. Cl.: H04W 28/06

(54) **METHOD FOR TRANSMITTING MODEL IDENTIFICATION INFORMATION, AND COMMUNICATION DEVICE**

(71) Applicant: GUANGDONG OPPO MOBILE TELECOMMUNICATIONS CORP., LTD., Dongguan, Guangdong 523860 (CN)
(72) Inventor: WU, Hao, Dongguan, Guangdong 523860 (CN); FAN, Jiangsheng, Dongguan, Guangdong 523860 (CN)
(74) Representative: RGTH
(86) International application number: PCT/CN2023/135864
(87) International publication number: WO 2025/112038

(57) **Abstract**

Provided in the present application are a method for transmitting model identification information, and a communication device. The method comprises: a first device sending first information to a second device, wherein the first information comprises one of the following: incremental information of a first model, the incremental information of the first model and reference information being used for determining model identification information of the first model; and information used for indicating whether the second device needs to transmit first model metadata, the first model metadata being used for describing the first model. In the embodiments of the present application, the incremental information of the first model can be transmitted between a plurality of communication devices (which are also referred to as the first device and the second device), and the incremental information is used for determining the model identification information of the first model together with the reference information. Compared with a conventional method for transmitting model identification information, the transmission of complete model identification information is helpful for reducing the overheads of model identification information transmission.

## Description

### TECHNICAL FIELD

The present application relates to the field of communication technologies, and more particularly, to a method for transmitting model identification information and a communication device.

### BACKGROUND

Currently, in order to unify the understanding of models among multiple communication devices, during a model identification process, model identification information (e.g., a model identifier and/or model metadata) needs to be exchanged among the multiple communication devices, so that model identification can be performed based on the model identification information. Taking a scenario where a network device communicates with a terminal device as an example, for subsequent management and control of a model, the network device typically needs to know the model deployed in the terminal device. Therefore, the terminal device needs to transmit the model identification information of the model to the network device, so that the network device can identify the model deployed in the terminal device. However, because the model identification information contains a large amount of content, the transmission of the model identification information requires the occupation of significant transmission resources.

### SUMMARY

The present application provides a method for transmitting model identification information and a communication device. The following describes various aspects of the present application.

In a first aspect, a method for transmitting model identification information is provided, which includes: transmitting, by a first device, first information to a second device, where the first information includes one of: delta information of a first model, where the delta information of the first model and reference information are used to determine model identification information of the first model; or information used to indicate whether the second device needs to transmit first model metadata, where the first model metadata is used to describe a first model.

In a second aspect, a method for transmitting model identification information is provided, which includes: receiving, by a second device, first information transmitted by a first device, where the first information includes one of: delta information of a first model, where the delta information of the first model and reference information are used to determine model identification information of the first model; or information used to indicate whether the second device needs to transmit first model metadata, where the first model metadata is used to describe a first model.

In a third aspect, a communication device is provided, the communication device is a first device and includes: a transmitting unit, configured to transmit first information to a second device, where the first information includes one of: delta information of a first model, where the delta information of the first model and reference information are used to determine model identification information of the first model; or information used to indicate whether the second device needs to transmit first model metadata, where the first model metadata is used to describe a first model.

In a fourth aspect, a communication device is provided, the communication device is a second device and includes: a receiving unit, configured to receive first information transmitted by a first device, where the first information includes one of: delta information of a first model, where the delta information of the first model and reference information are used to determine model identification information of the first model; or information used to indicate whether the second device needs to transmit first model metadata, where the first model metadata is used to describe a first model.

In a fifth aspect, a communication device is provided, which includes a processor, a memory, and a communication interface. The memory is configured to store one or more computer programs, and the processor is configured to invoke the computer program in the memory, to enable the communication device to perform some or all of the steps in the methods of the aforementioned various aspects.

In a sixth aspect, the embodiments of the present application provide a communication system, which includes the first device and/or the second device. In another possible design, the system may further include other devices that interact with the terminal device or the network device in the solutions provided by the embodiments of the present application.

In a seventh aspect, the embodiments of the present application provide a computer-readable storage medium, where the computer-readable storage medium stores a computer program, and the computer program enables a communication device (e.g., a first device and/or a second device) to perform some or all of the steps in the methods of the aforementioned various aspects.

In an eighth aspect, the embodiments of the present application provide a computer program product, where the computer program product includes a non-transitory computer-readable storage medium storing a computer program, and the computer program is operable to enable a communication device (e.g., a first device and/or a second device) to perform some or all of the steps in the methods of the aforementioned various aspects. In some implementations, the computer program product may be a software installation package.

In a ninth aspect, the embodiments of the present application provide a chip. The chip includes a memory and a processor. The processor can invoke a computer program from the memory and execute the computer program, to implement some or all of the steps described in the methods of the aforementioned various aspects.

In the embodiments of the present application, the delta information of the first model may be transmitted among multiple communication devices (e.g., the first device and the second device), where the delta information is used to determine the model identification information of the first model in conjunction with the reference information. Compared with transmitting the complete model identification information in a traditional transmission manner of model identification information, it helps reduce the overhead of transmitting model identification information.

### BRIEF DESCRIPTION OF THE DRAWINGS

FIG. 1 is a wireless communication system 100 to which embodiments of the present application are applied.
FIG. 2 is a schematic diagram of channel estimation and signal recovery applicable to the embodiments of the present application.
FIG. 3 is a schematic diagram of an artificial intelligence (AI) model-based channel-state information (CSI) feedback system applicable to the embodiments of the present application.
FIG. 4 illustrates a schematic diagram of an AI model-based positioning solution applicable to the embodiments of the present application.
FIG. 5 illustrates a schematic diagram of AI model-based beam management applicable to the embodiments of the present application.
FIG. 6 is a schematic diagram of a neural network applicable to the embodiments of the present application.
FIG. 7 is a schematic diagram of a convolutional neural network (CNN) applicable to the embodiments of the present application.
FIG. 8 is a schematic flowchart of a method for transmitting model identification information according to the embodiments of the present application.
FIG. 9 is a schematic flowchart of a method for model identification according to the embodiments of the present application.
FIG. 10 is a schematic diagram of a communication device according to the embodiments of the present application.
FIG. 11 is a schematic diagram of a communication device according to the embodiments of the present application.
FIG. 12 is a schematic diagram of a communication device according to the embodiments of the present application.
FIG. 13 is a schematic structural diagram of a communication apparatus according to the embodiments of the present application.

### DETAILED DESCRIPTION

Technical solutions in the present application will be described below with reference to the accompanying drawings.

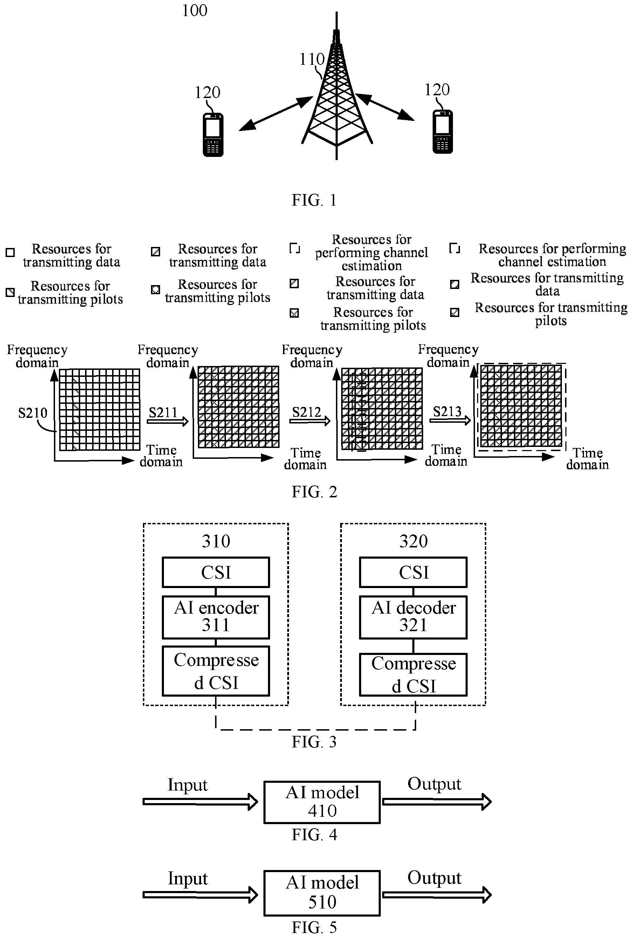

FIG. 1 is a wireless communication system 100 to which embodiments of the present application are applied. The wireless communication system 100 may include a network device 110 and terminal devices 120. The network device 110 may be a device that communicates with the terminal device 120. The network device 110 may provide communication coverage for a specific geographical area and may communicate with the terminal device 120 located within the coverage area.

FIG. 1 exemplarily illustrates one network device and two terminal devices. Optionally, the wireless communication system 100 may include multiple network devices, and within the coverage range of each network device, there may be other numbers of terminal devices, which is not limited in the embodiments of the present application.

Optionally, the wireless communication system 100 may further include other network entities such as a network controller and a mobility management entity, which is not limited in the embodiments of the present application.

It should be understood that the technical solutions of the embodiments of the present application may be applied to various communication systems, such as a 5th generation (5G) system or new radio (NR), a long term evolution (LTE) system, an LTE frequency division duplex (FDD) system, an LTE time division duplex (TDD) system, etc. The technical solutions provided in the present application may also be applied to future communication systems, such as a 6th generation mobile communication system, a satellite communication system, etc.

In the embodiments of the present application, the terminal device may also be referred to as a user equipment (UE), an access terminal, a user unit, a user station, a mobile site, a mobile station (MS), a mobile terminal (MT), a remote station, a remote terminal, a mobile device, a user terminal, a terminal, a wireless communication device, a user agent, or a user apparatus. In the embodiments of the present application, the terminal device may refer to a device that provides voice and/or data connectivity to a user, and may be used to connect people, objects and machines, such as a handheld device or in-vehicle device with a wireless connection function. In the embodiments of the present application, the terminal device may be a mobile phone, a tablet computer (Pad), a laptop computer, a handheld computer, a mobile internet device (MID), a wearable device, a virtual reality (VR) device, an augmented reality (AR) device, a wireless terminal in industrial control, a wireless terminal in self driving, a wireless terminal in remote medical surgery, a wireless terminal in smart grid, a wireless terminal in transportation safety, a wireless terminal in smart city, a wireless terminal in smart home, etc. Optionally, the UE may act as a base station. For example, the UE may act as a scheduling entity that provides sidelink signals between UEs in scenarios such as vehicle-to-everything (V2X) or device-to-device (D2D). For example, a cellular phone and a car may communicate with each other by using sidelink signals. A cellular phone and a smart home device may communicate with each other without relaying communication signals via a base station.

In the embodiments of the present application, the network device may be a device used for communicating with a terminal device, and the network device may also be referred to as an access network device or a radio access network device, such as a base station. In the embodiments of the present application, the network device may refer to a radio access network (RAN) node (or device) that connects the terminal device to a wireless network. The base station may broadly cover the following various names, or may be replaced with the following names, such as: a NodeB, an evolved base station (evolved NodeB, eNB), a next generation base station (next generation NodeB, gNB), a relay station, an access point, a transmitting and receiving point (TRP), a transmitting point (TP), a master eNB (MeNB), a secondary eNB (SeNB), a multi-standard radio (MSR) node, a home base station, a network controller, an access node, a radio node, an access point (AP), a transmission node, a transceiver node, a base band unit (BBU), a remote radio unit (RRU), an active antenna unit (AAU), a remote radio head (RRH), a central unit (CU), a distributed unit (DU), a positioning node, etc. The base station may be a macro base station, a micro base station, a relay node, a donor node, or similar entities, or a combination thereof. The base station may also refer to a communication module, a modem, or a chip configured to be set in the aforementioned devices or apparatuses. The base station may also be a mobile switching center, a device that performs functions of the base station in D2D communication, V2X communication, and machine-to-machine (M2M) communication, a network-side device in a 6G network, and a device that performs functions of the base station in a future communication system, etc. The base station may support networks with the same or different access technologies. The specific technologies used by the network device and the specific device forms of the network device are not limited in the embodiments of the present application.

The base station may be immobile or mobile. For example, a helicopter or a drone may be configured to act as a mobile base station, and one or more cells may move according to the location of the mobile base station. In other examples, the helicopter or the drone may be configured to act as a device communicating with another base station.

In some deployments, the network device in the embodiments of the present application may refer to a CU or a DU, or the network device may include a CU and a DU. The gNB may also include an AAU.

The network device and the terminal device may be deployed on land, which includes indoor or outdoor, in handheld or in-vehicle; may also be deployed on water; may be deployed on an aircraft, balloons, and satellite in the air. The scenarios in which the network device and terminal device are located are not limited in the embodiments of the present application.

It should be understood that all or part of the functions of the communication device in the present application may also be implemented by software functions running on hardware or by virtualized functions instantiated on a platform (e.g., a cloud platform).

### AI model-based channel estimation and signal recovery

Due to the complexity and time-varying nature of the wireless channel environment, in a wireless communication system (e.g., the wireless communication system described above), a receiver needs to recover received signals based on estimation results of a channel. FIG. 2 is a schematic diagram of channel estimation and signal recovery applicable to the embodiments of the present application.

As illustrated in FIG. 2, in step S210, in addition to transmitting data signals, a transmitter also transmits a series of pilot signals known to the receiver on time-frequency resources, such as a channel state information-reference signal (CSI-RS), a demodulation reference signal (DMRS), etc.

In step S211, the transmitter transmits the data signals and pilot signals to the transmitter through a channel.

In step S212, after receiving the pilot signals, the receiver may perform channel estimation. In a possible implementation, the receiver may estimate, based on a pre-stored pilot sequence and the received pilot sequence, channel information of the channel over which the pilot signals are transmitted by using a channel estimation algorithm (e.g., least squares (LS) channel estimation).

In step S213, the receiver may recover, based on the channel information of the channel over which the pilot sequence is transmitted, channel information over full time-frequency resources by using an interpolation algorithm, for subsequent channel state information (CSI) feedback or data recovery.

### AI model-based CSI feedback system

In a wireless communication system, the extraction and feedback of channel features are mainly implemented using codebook-based solutions. That is, after channel estimation is performed by the receiver, a precoding matrix that best matches the current channel is selected from a predefined precoding codebook according to certain optimization criteria based on the channel estimation results. Precoding matrix index (PMI) information is then fed back to the transmitter via an air interface feedback link for the transmitter to implement precoding. In some implementations, the receiver may also feed back the measured channel quality indication (CQI) to the transmitter for the transmitter to implement adaptive modulation and coding, etc.

FIG. 3 is a schematic diagram of an AI model-based CSI feedback system applicable to embodiments of the present application. As illustrated in FIG. 3, the entire feedback system includes an AI encoder 311 and an AI decoder 321 part of an auto-encoder, where the AI encoder 311 is deployed at a transmitter 310 and the AI decoder 321 is deployed at a receiver 320. The transmitter 310 compresses and encodes the CSI to be transmitted using the AI encoder 311 to obtain compressed CSI. The compressed CSI is then fed back to the receiver 320 via a feedback link, and the receiver 320 decodes the compressed CSI using the AI decoder 321 to obtain the recovered CSI. In this way, the communication overhead of feeding back CSI may be saved without compromising the accuracy of CSI transmission.

### AI model-based positioning

In cellular network wireless positioning, the direct propagation of electromagnetic waves between the network device and the terminal device is referred to as line of sight (LOS) wireless propagation. In some cases, electromagnetic wave signals cannot propagate in a straight line due to the obstruction of buildings or trees, which is commonly referred to as non line of sight (NLOS) wireless propagation. Traditional positioning algorithms such as time difference of arrival (TDOA) and angle-of-arrival (AOA) are based on LOS channels and are no longer applicable in environments dominated by NLOS. In most scenarios, the number of network devices that have LOS channels with the terminal device is often limited, resulting in insufficient accuracy of traditional positioning algorithms for high-precision positioning requirements. Additionally, non-ideal factors in practical systems may further reduce positioning accuracy.

Therefore, AI model-based high-precision positioning in an LOS/NLOS channel coexistence scenario has been proposed. Some existing research results indicate that by leveraging large amounts of channel data and training models using machine learning methods to explore the mapping relationship between channel responses and location coordinates, the problem that traditional positioning algorithms cannot be applied in the LOS/NLOS channel coexistence scenario may be overcome, thereby improving positioning accuracy.

FIG. 4 illustrates a schematic diagram of an AI model-based positioning solution applicable to the embodiments of the present application. As illustrated in FIG. 4, in the positioning solution for an LOS/NLOS channel coexistence scenario implemented by an AI model 410, the channel response may be used as the input of the AI model 410, and location coordinates may be used as the output of the AI model 410. The intrinsic relationship between the wireless channel and the location of terminal device is learned by using the AI model 410. Thus, even in scenarios with insufficient LOS channels and/or in scenarios affected by non-ideal conditions, according to the AI model 410-based positioning solution, relatively high-accuracy location coordinates of the terminal device may be output, helping to meet the requirements for high-precision positioning.

The above content introduced several communication processes applicable to AI models. The following content introduces the AI models applicable to the embodiments of the present application. It should be noted that the AI models applicable to the embodiments of the present application are not limited to the several AI models introduced below.

### AI model-based beam management

In traditional beam selection processes, it is usually necessary to traverse all combinations of receiving beams and transmitting beams to select the appropriate beam. However, traversing all combinations requires a long time, resulting in low efficiency in beam selection.

For example, suppose a network device deploys 64 different downlink transmission directions in FR2 (carried by up to 64 synchronization signal and physical broadcast channel blocks (SSBs)). Correspondingly, when receiving, the terminal device uses one or more antenna panels to simultaneously perform receiving beam scanning, with each antenna panel having 4 receiving beams. Then, the terminal device needs to measure at least 256 beam pairs, meaning that a downlink resource overhead of 256 resources is required. From a time perspective, each SSB period is approximately 20 ms, and 4 SSB periods are needed to complete measurements for 4 receiving beams. Assuming multiple receiving antenna panels may perform beam scanning simultaneously, at least 80 ms of time may be taken.

With the increase in the number of beams in future massive multiple-input multiple-output (MIMO) systems, using beam scanning-based beam management solutions to match the optimal beam pair will only result in greater reference signal transmission overhead and beam scanning latency. Therefore, to avoid the aforementioned issues, in R18, AI model-based beam management is proposed. The following sections introduce the AI model-based beam management solution by combining the training process and prediction process of the AI model.

Assuming the AI model is used to predict available beams from a beam set A, and correspondingly, during the training phase, a beam measurement result of a beam set B may serve as the training data for the AI model. In other words, the AI model is trained based on a beam measurement result of the beam set B, enabling the AI model to predict available beams from the beam set A.

It should be noted that the beam measurement result of the beam set B may include a measurement result corresponding to Layer 1 (L1) measurement quantity and/or indication information of selected beams in the beam set B (e.g., transmitting beam identifier, receiving beam identifier or beam pair identifier).

In some implementations, the training data may further include label information for the beam set A, the label information is used to indicate one or more of the following beams in the beam set A: an optimal transmitting beam, an optimal receiving beam, an optimal beam pair, multiple suboptimal transmitting beams, multiple suboptimal receiving beams, or suboptimal beam pairs.

As illustrated in FIG. 5, during the prediction phase, the input of an AI model 510 may include a link quality measurement result (e.g., L1 measurement quantity) corresponding to beams in the beam set A. A prediction result output by the AI model 510 may include a target beam selected from the beam set A and link quality corresponding to the target beam.

In some implementations, the target beam may be one or more beams. Taking the target beam as a single beam as an example, the target beam may be the optimal beam or a suboptimal beam in the beam set A. Taking the target beam being multiple beams as an example, the target beam may be multiple beams meet the requirement in the beam set A. Here, meeting the requirement can be understood as the link quality corresponding to the beam meeting the requirement, for example, the link quality corresponding to the beam is greater than or equal to a threshold.

In some other implementations, the target beam may refer to one or more beam pairs, where each beam pair may include a receiving beam or a transmitting beam. Taking the target beam being a single beam pair as an example, the target beam may be an optimal beam pair or a suboptimal beam pair in the beam set A. Taking the target beam being multiple beam pairs as an example, the target beam may be multiple beam pairs meeting the requirement in the beam set A, where meeting the requirement can be understood as the link quality corresponding to the beam pair meeting the requirement, for example, the link quality corresponding to the beam pair is greater than or equal to a threshold.

It should be noted that the link quality in the embodiments of the present application may be determined by one or more measurement quantities introduced above. Certainly, the link quality in the embodiments of the present application may also be determined based on other measurement quantities in future communication systems, which is not limited in the embodiments of the present application.

Additionally, the link quality being determined based on one or more measurement quantities can be understood as the link quality being obtained by processing one or more measurement quantities. Certainly, the link quality may also be the measurement quantity. This is not limited in the embodiments of the present application.

It should also be noted that if the prediction result only indicates one beam in a beam pair, the other beam in the beam pair may be determined through other manners, such as through a certain step or certain steps in the traditional beam selection procedure P1 to P3, or through a certain step or certain steps in the traditional beam selection procedure U1 to U3, which is not limited in the embodiments of the present application.

In some implementations, the beam set B may be different from the beam set A. In some implementations, the beam set B may be a subset of the beam set A. Correspondingly, by measuring a smaller number of beams (beams in the beam set B), predictions for a large number of beams (beams in the beam set A) may be achieved. Compared to the beam selection solution based on exhaustive traversal of all combinations described earlier, this helps reduce the time required for performing the beam selection process. Certainly, in the embodiments of the present application, the beams in the beam set B and the beams in the beam set A can be completely different beams. For example, there may be no overlap between the beams in the beam set B and the beams in the beam set A, but the beam directions corresponding to the beam set B may be similar to those corresponding to the beam set A.

In other implementations, the beam set B may be exactly the same beam set as the beam set A.

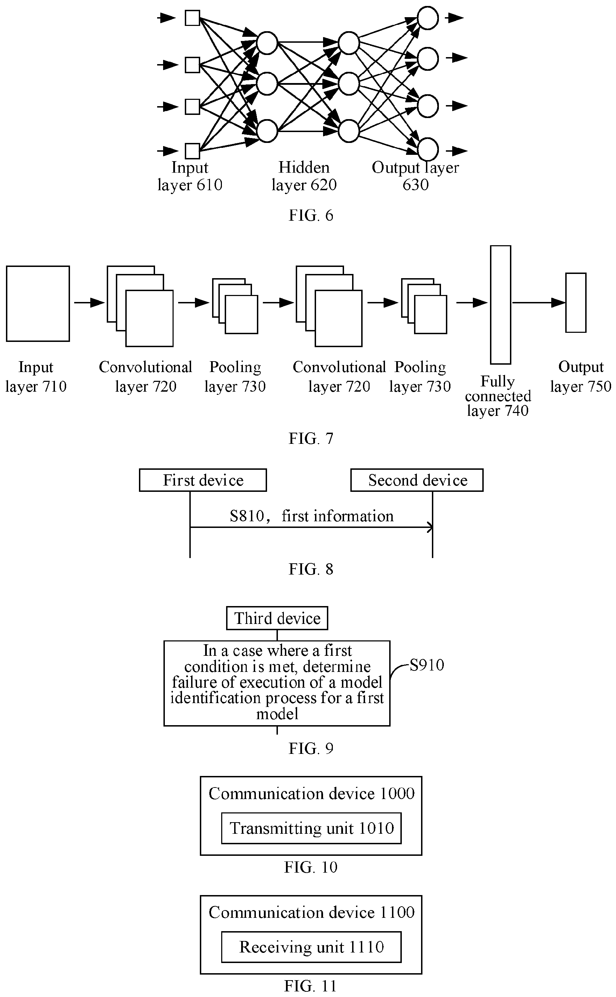

The above content introduced the communication process applicable to the AI model in combination with FIGS. 2 to 5, which is not limited in the embodiments of the present application. The AI model may also be applicable to other communication processes specified in future communication protocols. For example, the AI model may also be used for the selection of a target cell in cell handover. As another example, the AI model may also be used for the selection of a target cell during cell reselection. As another example, the AI model may also be used to predict communication link failure. As another example, the AI model may also be used for communication link recovery. As another example, the AI model may also be applied to sub-processes of the communication process. The following content introduces the AI model applicable to the embodiments of the present application in combination with FIGS. **6** to 7.

### AI Model

In recent years, artificial intelligence research represented by neural networks has achieved significant results in many fields and will continue to play an important role in people's production and daily lives for a long time to come. A neural network can be understood as a computational model composed of multiple interconnected neuron nodes, where the connections between nodes represent weighted values from input signals to output signals, commonly referred to as weights. Each node performs a weighted summation of different input signals and outputs through a specific activation function.

Common neural networks include a CNN, a recurrent neural network (RNN), a deep neural network (DNN), etc.

The neural network applicable to the embodiments of the present application is introduced below in combination with FIG. 6. The neural network illustrated in FIG. 6 may be divided into three categories according to the locations of different layers: an input layer 610, a hidden layer 620, and an output layer 630. Generally speaking, the first layer is the input layer 610, the last layer is the output layer 630, and the intermediate layers between the first layer and last layer are all hidden layers 620.

The input layer 610 is used for inputting data, where the input data can be, for example, a received signal received by a receiver. The hidden layer 620 is used for processing the input data, for example, decompressing the received signal. The output layer 630 is used for outputting the processed output data, for example, outputting the decompressed signal.

As illustrated in FIG. 6, the neural network includes multiple layers, and each layer includes multiple neurons. The neurons between layers may be fully connected or partially connected. For connected neurons, the output of a neuron in the previous layer may serve as the input for a neuron in the next layer.

With the continuous development of neural network research, deep learning algorithms for neural networks have been proposed in recent years, introducing more hidden layers into neural networks to form DNNs. More hidden layers enable the DNN to better model complex scenarios in the real world. Theoretically speaking, models with more parameters have higher complexity and greater "capacity," meaning they may accomplish more complex learning tasks. This type of neural network model is widely used in pattern recognition, signal processing, combination optimization, anomaly detection, and other areas.

The CNN is a deep neural network with a convolutional structure, and its structure is illustrated in FIG. 7, which may include an input layer 710, a convolutional layer 720, a pooling layer 730, a fully connected layer 740, and an output layer 750.

Each convolutional layer 720 may include many convolutional operators, the convolution operator is also known as a kernel, whose function may be designated as a filter for extracting specific information from the input signal. The convolution operator may essentially be a weight matrix, which is usually predefined.

The weight values in these weight matrices need to be obtained through extensive training in practical applications. The various weight matrices formed by the weight values obtained through training may extract information from the input signal, thereby helping the CNN make correct predictions.

When the CNN has multiple convolutional layers, the initial convolutional layers often extract more general features, and the general feature may also be referred to as a low-level feature. As the depth of the CNN increases, the later convolutional layers extract increasingly complex features.

The pooling layer 730, as it often needs to reduce the number of training parameters, is typically introduced periodically after convolutional layers. For example, it may be one pooling layer following one convolutional layer as illustrated in FIG. 7, or multiple convolutional layers followed by one or more pooling layers. In signal processing, the sole purpose of the pooling layer is to reduce the spatial size of the extracted information.

The fully connected layer 740, after processing through the convolutional layer 720 and the pooling layer 730, the CNN is still insufficient to output the required output information. As mentioned earlier, the convolutional layer 720 and the pooling layer 730 only extract features and reduce the parameters introduced by the input data. However, to generate the final output information (e.g., the bitstream of the original information transmitted by a transmitting end), the CNN also needs to utilize the fully connected layer 740. Typically, the fully connected layer 740 may include multiple hidden layers. The parameters contained in these multiple hidden layers may be obtained by performing pre-training based on relevant training data for specific task types. For example, the task type may include decoding data signals received by the receiver, or the task type may also include performing channel estimation based on pilot signals received by the receiver.

After the multiple hidden layers in the fully connected layer 740, the final layer of the entire CNN is the output layer 750, which is used to output results. Typically, this output layer 750 is equipped with a loss function (e.g., similar to a categorical cross-entropy loss function) to calculate prediction errors or to evaluate the degree of difference between the CNN model's output result (also known as a predicted value) and the ideal result (also known as a true value).

To minimize the loss function, the CNN model needs to be trained. In some implementations, the backpropagation algorithm (BP) may be used to train the CNN model. The training process of the BP consists of forward propagation and backpropagation. During the forward propagation (as illustrated in FIG. 7, the propagation from 710 to 750 is the forward propagation), input data is fed into the aforementioned layers of the CNN model, processed layer by layer, and transmitted to the output layer. If the output result from the output layer differs significantly from the ideal result, minimizing the aforementioned loss function is taken as the optimization goal, and the process switches to the backpropagation (as illustrated in FIG. 7, the propagation from 750 to 710 is the backpropagation). The partial derivatives of the optimization goal with respect to the weights of each neuron are calculated layer by layer, forming the gradient of the optimization goal with respect to the weight vector, which serves as the basis for modifying the model weights. The training process of the CNN is completed during the weight modification process. When the aforementioned error reaches the expected value, the training process of the CNN ends.

It should be noted that the CNN illustrated in FIG. 7 is only an example of a convolutional neural network. In specific applications, the convolutional neural network may also exist in the form of other network models, which is not limited in the embodiments of the present application.

The purpose of RNNs is to process sequence data. In traditional neural network models (e.g., CNN models), the flow is from the input layer to the hidden layer and then to the output layer, with full connections between layers and no connections between nodes within the same layer. However, such ordinary neural networks are ineffective for many problems. For example, to predict the next word in a sentence, the preceding words are generally needed because words in a sentence are not independent of each other. The RNNs are referred to as recurrent neural networks because the current output of a sequence is also related to previous outputs. The specific manifestation is that the network will remember the previous information and apply it to the current output calculation. That is, the nodes between the hidden layers are no longer unconnected but connected, and the input of the hidden layer includes not only the output of the input layer but also the output of the hidden layer at the previous moment. Theoretically, the RNNs may process sequence data of any length.

The training of the RNN is the same as the training of a traditional artificial neural network (ANN). It also uses the BP error backpropagation algorithm, but with one difference. If RNNs are unfolded into a network, the parameters W, U, and V are shared, whereas in traditional neural networks, they are not. Moreover, when using a gradient descent algorithm, the output of each step depends not only on the network of the current step but also on the states of the network of several previous steps. For example, when t=4, three more steps need to be passed backward, and various gradients need to be added to the subsequent three steps. This learning algorithm is referred to as a back propagation through time (BPTT) algorithm.

Since there are the artificial neural network and the convolutional neural network, why a recurrent neural network is required? The reason is simple: the fundamental assumption for both the convolutional neural network and the artificial neural network is that elements are independent of each other, and input and output are also independent, such as a cat and a dog. However, in the real world, many elements are interconnected, such as stock prices changing over time, or a person saying: "I love traveling, and my favorite place is Yunnan. I must visit __ when I get the chance." Here, when filling in the blank, people would naturally know it should be "Yunnan." This is because it is inferred from the context, but it is quite difficult for the opportunity to do this. Thus, there is the current recurrent neural network, whose essence is: to have the ability to remember like a human. Therefore, its output depends on both the current input and memory.

### Model identification

Model identification can be understood as a process for establishing a common understanding of a model among multiple communication devices (e.g., terminal devices and network devices). That is to say, model identification information used to indicate a model may be shared among multiple communication devices, so that the multiple communication devices may uniformly confirm the model indicated by the information based on the model identification information.

In some scenarios, model identification is a prerequisite for a model management process. Taking the model management process including a model transmission process as an example, during the model transmission process, multiple communication devices need to identify the transmitted model based on model identification information. Taking the model management process including a model activation process as an example, in a scenario where a network device communicates with a terminal device, the network device activates a certain model for the terminal device, and the network device and the terminal device need to identify the activated model based on model identification information.

In some implementations, the model identification information in the model identification process may include a model identifier (also referred to as a "model ID") and/or model metadata (also referred to as "meta information (Meta info)"). That is to say, the model identification process can be understood as a model identification process performed based on the model identifier and/or model metadata.

In some implementations, the model identifier is used to identify a model. For example, the model identifier may be a global identifier (global ID), and the global identifier is used to uniquely identify a model. Typically, the length of the global ID may be relatively long, and if the global ID is transmitted over the air interface, a large amount of air interface resources would be consumed. Therefore, a new type of model identifier is introduced: a local ID or a temporary ID. The length of the identifier is shorter than the global ID, and the identifier may be utilized for model management, thereby helping to reduce transmission overhead.

In some implementations, the model metadata may include related information of a model, or the model metadata is used to describe a model. For example, the model metadata may include one or more of the following types of information: input information of a model, output information of a model, vendor information of a model, applicable scenarios of a model (e.g., indoor or outdoor), or model performance metrics (for a model used for positioning, the model performance metrics include positioning accuracy). Certainly, the content of the model metadata is not limited in the embodiments of the present application.

In some implementations, in addition to being applied to the model management process, the model identification information may also be applied to a model control process.

Currently, to unify the understanding of models among multiple communication devices, during the model identification process, the model identification information needs to be transmitted among the multiple communication devices, so that model identification may be performed based on the model identification information. Taking a scenario where a network device communicates with a terminal device as an example, to manage and control subsequent models, the network device typically needs to know the models deployed in the terminal device. Therefore, the terminal device needs to transmit the model identification information of the models to the network device, so that the network device may identify the models deployed in the terminal device. However, since the model identification information contains a large amount of content, the model identification information needs to occupy relatively large transmission resources.

The applicant has discovered that in some scenarios, the model identification information among multiple models may have similarities. Suppose multiple models may adopt the same model structure, and the only difference among the multiple models lies in different model parameters. For such models, the model metadata may have similarities. For example, since model structures of the multiple models are the same, the input information of the models contained in the model metadata of the multiple models may be completely identical. In this case, if the traditional manner of transmitting model identifiers and model metadata is followed, during the model identification process, it is still necessary to transmit the corresponding model identifier and model metadata for each model, resulting in duplicate information (e.g., input information of the models) being transmitted multiple times, increasing transmission overhead.

Taking a scenario where multiple models are used for beam management for different cells as an example. In this case, since functions implemented by the multiple models are similar, the same model structure may be adopted. However, due to different communication conditions in different cells, the model parameters of the multiple models are different. For these models, there is similarity among their model metadata, that is, since model structures of the multiple models are the same, the input information of the models contained in the model metadata of the multiple models may be completely identical. In this case, if the traditional manner of transmitting model identifiers and model metadata is followed, during the model identification process, it is still necessary to transmit the corresponding model identifier and model metadata for each model, resulting in duplicate information (e.g., input information of the models) being transmitted multiple times, increasing transmission overhead.

In other scenarios, since a model is not unique to a particular terminal device, the models deployed in different terminal devices may be the same. In this case, the model identifiers and model metadata of the models deployed in different terminal devices may be completely identical. In such a scenario, if the traditional manner of transmitting model identifiers and model metadata is followed, during the model identification process, it is still necessary to transmit the corresponding model identifier and model metadata for each terminal device, resulting in duplicate information (e.g., model identifiers and/or model metadata) being transmitted multiple times, increasing transmission overhead.

In other scenarios, whether it is a global ID or a local ID, IDs of the same type of models may share commonality. In such a scenario, if the traditional manner of transmitting model identifiers and model metadata is followed, during the model identification process, it is still necessary to transmit the model identifier for each model, resulting in relatively high transmission overhead. Assuming that a model identifier contains a segment of vendor code. In this case, if Model 1 and Model 2 come from the same vendor, both the global ID of Model 1 and the global ID of Model 2 will contain a field 0100 to indicate the vendor of the model. If the traditional manner of transmitting model identifiers and model metadata is followed, during the model identification process, it is still necessary to transmit the model identifier for each model, resulting in relatively high transmission overhead.

Therefore, to address the aforementioned issues, the embodiments of the present application provide a method for transmitting model identification information. In this method, delta information of a first model may be transmitted among multiple communication devices (hereinafter also referred to as a first device and a second device), where the delta information is used to determine model identification information of the first model in conjunction with reference information. Compared with transmitting the complete model identification information in a traditional transmission manner of model identification information, this method helps reduce the overhead of transmitting model identification information. The method for transmitting model identification information of the embodiments of the present application is introduced below in Embodiment 1 in combination with FIG. 8.

### Embodiment 1

Referring to FIG. 8, in step S810, a first device transmits first information to a second device.

In some implementations, the first information includes delta information of a first model, where the delta information of the first model and reference information are used to determine model identification information of the first model.

In some implementations, the delta information may be understood as information specific to a certain model within the model identification information. That is to say, for the delta information, the delta information corresponding to different models may be different. Typically, the delta information may be used in combination with reference information to obtain complete model identification information.

In some implementations, if the model identification information includes a model identifier, the delta information may be delta information used to determine the model identifier. In the embodiments of the present application, the model identifier is not limited. For example, the model identifier may be a global identifier of the first model. For another example, the model identifier may be a local ID of the first model.

In some implementations, if the model identification information includes model metadata, the delta information may be delta information used to determine the model metadata.

In the embodiments of the present application, the completeness of the delta information is not limited. For example, the delta information may be one piece of complete model identification information, or the delta information may be used independently to indicate a model. As another example, the delta information may be one piece of incomplete model identification information, or the delta information may only contain partial information in the model identification information, or in multiple models, the delta information for each model may contain the unique part in the model identification information of each model.

In some implementations, the reference information can be understood as basic information of the model identification information. Typically, the reference information may be used in combination with the delta information to obtain one piece of complete model identification information.

In some scenarios, the reference information may be shared by multiple models, or the reference information is used to generate the model identification information for one or more models, where the one or more models include the first model. In this way, when indicating the model identification information for different models, only the delta information of the different models may be transmitted. Correspondingly, the second device may determine the model identification information of the different models based on the reference information and the delta information of the different models. Compared with a traditional manner of directly transmitting the complete model identification information of each model, this helps reduce the overhead of transmitting model identification information.

In some implementations, if the model identification information includes a model identifier, the reference information may be reference information used to determine the model identifier. In the embodiments of the present application, the model identifier is not limited. For example, the model identifier may be a global identifier of the first model. As another example, the model identifier may be a local ID of the first model.

In some implementations, if the model identification information includes model metadata, the reference information may be reference information used to determine the model metadata.

In the embodiments of the present application, the completeness of the reference information is not limited. For example, the reference information may be one piece of complete model identification information, or the reference information may be used independently to indicate a model. As another example, the reference information may be one piece of incomplete model identification information, or the reference information may only contain partial information in the model identification information, or the reference information may contain the common part of the model identification information of multiple models.

Furthermore, in the embodiments of the present application, the transmission manner of the reference information is not limited. In some implementations, the reference information may be predefined, for example, the reference information may be predefined by a protocol. In other implementations, the reference information may be preconfigured. In other implementations, the reference information may be configured by a network device. Certainly, in the embodiments of the present application, both the reference information and the configuration information may also be indicated via the first information.

In some scenarios, the first information may be used in a model configuration process. Therefore, the delta information may also be referred to as "delta configuration," and correspondingly, the reference information may also be referred to as "reference configuration."

The above content introduced the delta information and the reference information in the embodiments of the present application. The following content introduces the manner of generating the model identification information of the first model in the embodiments of the present application.

In some implementations, if the reference information includes complete model identification information of the first model, the delta information is null. In this case, it can be understood that the model identification information of other models may be adjusted based on the model identification information of the first model (i.e., the reference information), or the model identification information of other models may be obtained by adjusting the model identification information of the first model in combination with delta information of the other models. Certainly, when the reference information includes the complete model identification information of the first model, the delta information may also include the complete model identification information of the first model, which is not limited in the embodiments of the present application.

In other implementations, if the reference information is null, the delta information is the complete model identification information of the first model.

In some implementations, the model identification information of the first model is obtained by adjusting the reference information using the delta information. In the embodiments of the present application, the specific adjustment manner is not limited. Several common adjustment manners are introduced below in combination with Examples 1 to 4. It should be understood that the adjustment manners applicable to the embodiments of the present application are not limited to these examples.

**Example 1**: if the delta information corresponds to partial information in the reference information, the model identification information of the first model includes the delta information, and other information in the reference information excluding the partial information.

Alternatively, if the model identification information described by the delta information corresponds to the model identification information described by the partial information in the reference information, the model identification information of the first model is obtained by replacing the partial information in the reference information with the delta information. Alternatively, the reference information includes first partial information, if the model identification information described by the delta information corresponds to the model identification information described by the first partial information, the model identification information of the first model is obtained by replacing the first partial information in the reference information with the delta information. Alternatively, if the delta information corresponds to a subset of the reference information, the model identification information of the first model is obtained by replacing the partial information in the reference information with the delta information.

In the embodiments of the present application, the aforementioned "correspond" is not limited. In some implementations, the "correspond" can be understood as the information function of the model identification information described by the delta information being similar to the information function of the model identification information described by the partial information in the reference information. For example, if the model identification information described by the delta information is vendor information of a model, and the partial information in the reference information is used to describe the vendor information of the model, it can be understood that both the model identification information described by the delta information and the model identification information described by the partial information in the reference information are used to describe the vendor of the model. That is, the information function of the model identification information described by the delta information being similar to the information function of the model identification information described by the partial information in the reference information, or the delta information corresponds to the information used to describe the vendor of the model in the reference information.

In other implementations, the "correspond" can be understood as the bit of the model identification information described by the delta information in the complete model identification information being the same as the bit of the model identification information described by the partial information the reference information. For example, if 2nd to 4th bits of the complete model identification information are used to indicate input information of the model, and the reference information is the complete model identification information, the delta information may contain only the information used to indicate the input information of the model, that is, the delta information contains only the information carried by the 2nd to 4th bits in the complete model identification information, the bits corresponding to the delta information are the same as the bits in the reference information where the input information of the model is described. That is to say, the delta information corresponds to the information carried in 2nd to 4th bits of the reference information.

For ease of understanding, the term "correspond" in the embodiments of the present application is introduced below by taking radio resource control (RRC) information element (IE) reference information (reference) and RRC IE delta information (delta) as an example. Assume that the RRC IE reference may be represented as:

| | |
|---|---|
| **Field 1** | **value1** |
| Field 2 | value2 |

And the RRC IE delta may be represented as:

| | |
|---|---|
| **Field 1** | **value3** |
| Field 3 | value4 |

Correspondingly, if Field 1 in the RRC IE reference has the same function as Field 1 in the RRC IE delta, Field 1 in the RRC IE reference corresponds to Field 1 in the RRC IE delta. Alternatively, if Field 1 in the RRC IE reference has the same field name as Field 1 in the RRC IE delta, Field 1 in the RRC IE reference corresponds to Field **1** in the RRC IE delta.

For example, Model 1 and Model 2 are beam management models applicable to different cells. The two models have the same model structure but different model parameters. The model ID of Model 1 is 011000010, and the model ID of Model 2 is 011000110. In the model IDs, the model identification information representing the model structure consists of the first six bits of the model ID. Therefore, the first six bits in the model ID of Model 1 are the same as the first six bits in the model ID of Model 2. Taking the model ID of Model 2 as the reference information as an example, correspondingly, the delta information of Model 1 may contain only the last three bits "010" in the model ID of Model 1. In this case, the delta information of Model 1 corresponds to the last three bits "010" in the reference information, and correspondingly, the model ID of Model 1 is obtained by replacing the last three bits in the reference information with the delta information "010", that is, the model ID of Model 1 is 011000010.

**Example 2**: if the reference information corresponds to the partial information in the delta information, the model identification information of the first model includes the delta information, and the model identification information of the first model does not include the reference information.

Alternatively, if the model identification information described by the reference information corresponds to the model identification information described by the partial information in the delta information, the model identification information of the first model is obtained by replacing all reference information with the delta information. Alternatively, if the delta information includes first partial information, and the model identification information described by the reference information corresponds to the model identification information described by the first partial information, the model identification information of the first model is obtained by replacing all information in the reference information with the delta information. Alternatively, if the reference information is a subset of the delta information, the model identification information of the first model is obtained by overwriting all reference information with the delta information.

In the embodiments of the present application, the aforementioned "correspond" is not limited. In some implementations, the "correspond" can be understood as the information function of the model identification information described by the reference information being similar to the information function of the model identification information described by partial information in the delta information. For example, if the model identification information described by the reference information is vendor information of a model, and the partial information in the delta information is used to describe the vendor information of the model, it can be understood that both the model identification information described by the reference information and the model identification information described by the partial information in the delta information are used to describe the vendor of the model. That is, the information function of the reference information is similar to the information function of the information used to describe the vendor of the model in the delta information, or the reference information corresponds to the information used to describe the vendor of the model in the delta information.

In other implementations, the "correspond" can be understood as the bits corresponding to the reference information in the complete model identification information being the same as the bits corresponding to partial information in the delta information in the complete model identification information. For example, if 2nd to 4th bits in the complete model identification information are used to indicate input information of a model, and the delta information is the complete model identification information, the reference information may include only the information used to indicate the input information of the model, that is, the reference information includes only the information of the 2nd to 4th bits in the complete model identification information, the bits of the reference information in the complete model identification information are the same as the bits of the information carried by the 2nd to 4th bits in the delta information. That is to say, the reference information corresponds to the information carried by the 2nd to 4th bits in the delta information.

It should be noted that the meaning of the term "correspond" in the embodiments of the present application is similar to the meaning of the term "correspond" in Example 1. For details, please refer to the introduction in the previous content.

For example, Model 1 and Model 2 are beam management models applicable to different cells. The two models have the same model structure but different model parameters. The model ID of Model 1 is 011000010, and the model ID of Model 2 is 011000110. The model identification information in the model ID, which represents the model structure, consists of the first six bits of the model ID. Therefore, the first six bits of the model ID of Model 1 are the same as the first six bits of the model ID of Model 2. Taking the last three bits "110" in the model ID of Model 2 as reference information, correspondingly, the delta information of Model 1 may include the model ID of Model 1: 011000010. In this case, the reference information corresponds to the last three bits "010" in the delta information of Model 1. Correspondingly, the model ID of Model 1 is obtained by replacing all the information in the reference information with the delta information "011000010", that is, the model ID of Model 1 is 011000010.

**Example 3**: if the delta information does not correspond to the reference information, the model identification information of the first model includes the delta information and the reference information.

Alternatively, if the model identification information described by the delta information completely does not correspond to the model identification information described by the reference information, the model identification information of the first model includes all information of the delta information and all information of the reference information. Alternatively, if the delta information includes first partial information and the reference information includes second partial information, and the first partial information does not correspond to the second partial information in the model identification information of the first model, the model identification information of the first model includes the first partial information and the second partial information. Alternatively, if the reference information and the delta information are completely disjoint, the model identification information of the first model is obtained by superimposing the first partial information and the second partial information. Alternatively, if the reference information and the delta information are completely disjoint, the model identification information of the first model is obtained by concatenating the first partial information and the second partial information.

In the embodiments of the present application, the aforementioned "not correspond" is not limited. In some implementations, "not correspond" can be understood as that the function of the model identification information described by the first partial information is different from the function of the model identification information described by the second partial information. For example, if the first partial information is used to describe vendor information of the model, and the second partial information is used to describe input information of the model, the function of the model identification information described by the first partial information is different from the function of the model identification information described by the second partial information, that is, the first partial information does not correspond to the second partial information.

In other implementations, "not correspond" can be understood as the bits of the first partial information in the complete model identification information are different from the bits of the second partial information in the complete model identification information. For example, if in the complete model identification information, the 2nd to 4th bits are used to indicate input information of the model, and the 5th to 7th bits are used to indicate the vendor of the model, the first partial information may include only the information carried in the 2nd to 4th bits, and the second partial information may include only the information carried in the 5th to 7th bits. In this case, the bits of the first partial information in the complete model identification information are different from the bits of the second partial information in the complete model identification information, that is, the first partial information does not correspond to the second partial information.

It should be noted that the meaning of the term "correspond" in the embodiments of the present application is similar to the meaning of the term "correspond" in Example 1. For details, please refer to the introduction in the previous content.

For example, Model 1 and Model 2 are beam management models applicable to different cells. The two models have the same model structure but different model parameters. The model ID of Model 1 is 011000010, and the model ID of Model 2 is 011000110. The model identification information in the model ID that represents the model structure consists of the first six bits of the model ID. Therefore, the first six bits of the model ID of Model 1 are the same as the first six bits of the model ID of Model 2. The model identification information in the model ID that represents the model parameters consists of the last three bits of the model ID. Therefore, the last three bits of the model ID of Model 1 are different from the last three bits of the model ID of Model 2. Taking the first six bits "011000" of the model ID of Model 2 as reference information, and correspondingly, the delta information of Model 1 may include the last three bits of the model ID of Model 1: 010. In this case, the model ID of Model 1 includes the reference information and the delta information, that is, the model ID of Model 1 is 011000010.

**Example 4**: if first partial information in the delta information corresponds to first partial information in the reference information, and second partial information in the delta information does not correspond to second partial information in the reference information, the model identification information of the first model includes the first partial information in the delta information, the second partial information in the delta information, and the second partial information in the reference information, and the model identification information of the first model does not include the first partial information in the reference information.

Alternatively, if the model identification information described by the first partial information in the delta information corresponds to the model identification information described by the first partial information in the reference information, and the model identification information described by the second partial information in the delta information does not correspond to the model identification information described by the second partial information in the reference information, the model identification information of the first model includes the first partial information in the delta information, the second partial information in the delta information, and the second partial information in the reference information. Alternatively, if the reference information and the delta information partially overlap, the overlapping part of the information in the reference information may be replaced by the overlapping part of the information in the delta information, while the non-overlapping parts in both the delta information and the reference information are retained.

In the embodiments of the present application, for the explanation of the aforementioned "correspond" and/or "not correspond", please refer to the descriptions in Examples 1 to 3, which will not be repeated herein for the sake of brevity.

For example, the reference information may include Information 1 and Information 2, and the delta information may include Information 3 and Information 4. Here, Information 1 corresponds to Information 3, while Information 2 does not correspond to Information 4. In this case, Information 1 in the reference information may be replaced by Information 3 in the delta information, while Information 2 and Information 4 are retained, so as to obtain the model identification information of the first model. That is to say, the model identification information of the first model may be represented as {Information 3; Information 2; Information 4}.

As described above, the embodiments of the present application do not specifically limit the manner of adjusting the reference information using the delta information. In some implementations, the adjustment manner may include concatenation. For example, the delta information and the reference information may be concatenated in a specific order to obtain the model identification information of the first model. In other implementations, the adjustment manner may include an exclusive OR (XOR) operation. For example, the XOR operation may be performed on the reference information using the delta information to obtain the model identification information of the first model. In yet other implementations, the adjustment manner may include a replacement operation. For example, the delta information may be used to replace the partial information in the reference information to obtain the model identification information of the first model.

Additionally, in the embodiments of the present application, the concatenation order may be predefined, preconfigured, or configured by a network device. Certainly, the concatenation order may also be transmitted via the first information. It should also be noted that the adjustment manner may be predefined, preconfigured, or configured by a network device. Certainly, the adjustment manner may also be transmitted via the first information.

For ease of understanding, the following content describes, by using examples in which the model identification information includes a model identifier and model metadata respectively, the solution for obtaining the model identification information of the first model in the embodiments of the present application.

Assume that Model 1 and Model 2 are beam management models applicable to different cells, and the model ID of Model 1 is 011000010, while the model ID of Model 2 is 011000110. Additionally, the adjustment manner may include an XOR operation or a superposition operation. Generally speaking, 0 XOR 0 = 0; 0 XOR 1 = 1; 1 XOR 0 = 1; 1 XOR 1 = 0.

Exemplarily, the reference information is the ID of Model 1: 011000010. In this case, the reference information may be independently used to indicate the model ID of Model 1. When the first device transmits the first information to the second device, and the carried delta information of Model 2 is used to indicate the model ID of Model 2, and the delta information is 100, which is used to adjust the last three bits of the reference information. Correspondingly, after receiving the first information, the second device may perform an XOR operation on the last three bits of the reference information 011000010 with the delta information 100 to obtain the model identifier of Model 2: 011000110.

Exemplarily, the reference information may be 011000000. In this case, the reference information does not indicate any model ID. When the first device transmits the first information to the second device, and the carried delta information 1 is used to indicate the model ID of Model 1, and the delta information 1 is 010, which is used to adjust the last three bits of the reference information. Correspondingly, after receiving the first information, the second device may perform an XOR operation on the reference information 011000000 with the delta information 1 to obtain the model ID of Model 1: 011000010.

When the first device transmits the first information to the second device, and the carried delta information 2 is used to indicate the model ID of Model 2, the delta information 2 is 110, which is used to adjust the last three bits of the reference information. Correspondingly, after receiving the first information, the second device may perform an XOR operation on the reference information 011000000 with the delta information 2 to obtain the model ID of Model 2: 011000110.

Exemplarily, the reference information may be null. In this case, the reference information does not indicate any model ID. When the first device transmits the first information to the second device, and the carried delta information is used to indicate the model ID of model 1, the delta information is 011000010, which is used to adjust the reference information. Correspondingly, after receiving the first information, the second device may perform a superposition operation on the delta information 011000010 with the reference information to obtain the model ID of Model 1: 011000010.

Assume that the model metadata includes input information of the model and output information of the model. Models 1 to 3 are models for positioning applicable to different cells, where the input information of Model 1 is reference signal receiving power (RSRP) and the position information of the terminal device, and the output information of Model 1 is RSRP and the position information of the terminal device. The input information of Model 2 is RSRP, and the output information of Model 2 is RSRP. Additionally, the adjustment manner may include a merge operation or a replacement operation.

Exemplarily, the reference information may be the model metadata of Model 2. In this case, the reference information is complete model identification information. When the first device transmits the first information to the second device, and the carried delta information is used to indicate the model metadata of Model 1, the delta information may indicate that the input information is the position information of the terminal device and the output information is the position information of the terminal device. Correspondingly, after receiving the first information, the second device may perform a merge operation on the reference information and the delta information to obtain the model metadata of Model 1: the input information of Model 1 is RSRP and the position information of the terminal device, and the output information of Model 1 is RSRP and the position information of the terminal device.

Exemplarily, the reference information may be the model metadata of Model 2. In this case, the reference information is complete model identification information. When the first device transmits the first information to the second device, and the carried delta information is used to indicate the model metadata of Model 1, the delta information may indicate that the input information is RSRP and the position information of the terminal device, and the output information is RSRP and the position information of the terminal device. Correspondingly, after receiving the first information, the second device may perform a replacement operation on the reference information and the delta information to obtain the model metadata of Model 1: the input information of Model 1 is RSRP and the position information of the terminal device, and the output information of Model 1 is RSRP and the position information of the terminal device.

It should be noted that the first device may be a device where the first model is deployed, and correspondingly, the second device may be a device that needs to identify the first model. Alternatively, the first device may be a device that has already identified the first model. In this case, the first device may store the model identification information of the first model, and correspondingly, the second device may be a device that needs to identify the first model. Alternatively, the first device may be a device that stores the model identification information of the first model, and correspondingly, the second device may be a device that needs to identify the first model.

In the embodiments of the present application, the device types of the first device and/or the second device are not limited. For example, the first device may be a terminal device, and correspondingly, the second device may be a network device. As another example, the first device may be a network device, and correspondingly, the second device may be a terminal device. As another example, both the first device and the second device may be network devices. As yet another example, both the first device and the second device may be terminal devices.

### Embodiment 2

As described above, since a model is not unique to a specific communication device (e.g., a terminal device), models deployed in different communication devices may be the same. In such a scenario, if the traditional model identification information transmission manner is followed, during the model identification process, it is still necessary to transmit model identification information for each model in each communication device, resulting in the same model identification information being transmitted multiple times, which increases the overhead of transmitting model identification information.

To address the aforementioned issue, the embodiments of the present application propose a method for transmitting model identification information. In this solution, the first device may transmit the first information to the second device to indicate whether the second device needs to transmit information of the first model metadata. That is to say, the first device may indicate the second device to transmit the first model metadata on demand, which helps avoid unnecessary data transmission and reduces the transmission overhead of the first model metadata.

As illustrated in FIG. 8, in step S810, the first information is used to indicate whether the second device needs to transmit the first model metadata, or the first information is used to determine whether the second device needs to transmit the first model metadata.

In the embodiments of the present application, the indication manner of the first information is not limited. In some implementations, the information indicating to transmit the first model metadata and the information indicating not to transmit the first model metadata may be directly carried by the first information. For example, they may be carried by one or more bits in the first information. Taking one-bit indication as an example, if the value of a bit is a first value, the bit may be used to indicate to transmit the first model metadata. Correspondingly, if the value of the bit is a second value, the bit may be used to indicate not to transmit the first model metadata, where the first value is different from the second value. The first value may be 1 and the second value may be 0. Alternatively, the first value may be 0 and the second value may be 1.

In other implementations, the information indicating to transmit the first model metadata may be directly carried by the first information, and correspondingly, the information indicating not to transmit the first model metadata may be indirectly indicated by the first information. For example, the information indicating to transmit the first model metadata may be indicated by a bit carried in the first information. For details, please refer to the introduction in the previous content. Correspondingly, if the first information is not transmitted, or the second device does not receive the first information, it may be considered that the first model metadata does not need to be transmitted.

In other implementations, the information indicating not to transmit the first model metadata may be directly carried by the first information, and correspondingly, the information indicating to transmit the first model metadata may be indirectly indicated by the first information. For example, the information indicating not to transmit the first model metadata may be indicated by a bit carried in the first information. For details, please refer to the introduction in the previous content. Correspondingly, if the first information is not transmitted, or the second device does not receive the first information, it may be considered that the first model metadata needs to be transmitted.

In some implementations, if the first information is used to indicate that the second device does not need to transmit the first model metadata, the first information may be acknowledgement (ACK), indicating that the model identification process for the first model ends and there is no need to transmit the first model metadata describing the first model. Additionally, since the ACK occupies a small number of bits (typically 1 bit), using the ACK to indicate that the second device does not need to transmit the first model metadata helps reduce transmission overhead.

In other implementations, if the first information is used to indicate that the second device needs to transmit the first model metadata, the first information may be negative acknowledgement (NACK), indicating that the model identification process for the first model has not ended and transmission of the first model metadata describing the first model needs to continue. Additionally, since the NACK occupies a small number of bits (typically 1 bit), using the NACK to indicate that the second device needs to transmit the first model metadata helps reduce transmission overhead.

In some implementations, if the first device stores the first model metadata, the first information is used to indicate the second device not to transmit the first model metadata. That is to say, if the first device already stores the first model metadata, the first device may use the first information to indicate the second device not to transmit the first model metadata, which helps avoid repeated transmission of the same data, thereby reducing the transmission overhead for the first model metadata.

In other implementations, if the first device does not store the first model metadata, the first information is used to indicate the second device to transmit the first model metadata. That is to say, if the first device does not store the first model metadata, the first device needs the first model metadata to perform model identification. In this case, the first device may use the first information to indicate the second device to transmit the first model metadata, which helps improve the possibility of model identification.

In the embodiments of the present application, the method for the first device to determine whether the first model metadata needs to be transmitted is not limited. In some implementations, if the first model metadata is used to describe the first model, the first device may make the determination based on the model identifier of the first model. For example, the first device may determine, based on the model identifier of the first model, that model metadata corresponding to the model identifier of the first model is stored, that is, the model metadata is the model metadata describing the first model (i.e., the first model metadata). As another example, the first device may determine, based on the model identifier of the first model, that model metadata corresponding to the model identifier of the first model is not stored, that is, the first device does not store the first model metadata.

Additionally, in the embodiments of the present application, the scenario where the first device has already stored the first model metadata is not limited. In some implementations, the first model metadata may be transmitted to the second device by other devices excluding the second device. For example, before transmitting the first information, the other devices also deploy the first model and transmit the first model metadata of the first model to the first device, so that the first device obtains the first model metadata in advance.

As described above, if the first device does not store the first model metadata, the first device may use the first information to indicate the second device to transmit the first model metadata. In some implementations, in response to receiving the first information, the second device may transmit the first model metadata. In other implementations, after receiving the first information, the second device may determine whether to transmit the first model metadata based on a triggering condition of the first model metadata.

In some implementations, the triggering condition may be associated with the communication quality of the second device. For example, the triggering condition may include a measurement result of a received signal of the second device (e.g., RSRP) being greater than or equal to a measurement result threshold. Correspondingly, meeting the triggering condition represents that the communication quality of the second device is good. Transmitting the first model metadata in this case helps improve the reliability of transmitting the first model metadata. Certainly, in the embodiments of the present application, the triggering condition may also include the interference experienced by the second device being less than a threshold. Correspondingly, meeting the triggering condition represents that the communication quality of the second device is good and interference is low, and transmitting the first model metadata in this case helps improve the reliability of transmitting the first model metadata.

In other implementations, the triggering condition may be associated with the bandwidth of the second device. For example, the triggering condition may include an available bandwidth of the second device being greater than or equal to a bandwidth threshold. Correspondingly, meeting the triggering condition represents that the second device has remaining bandwidth available for transmitting the first model metadata, so as to avoid affecting the transmission of other information when transmitting the first model metadata. Certainly, in the embodiments of the present application, the triggering condition may also include the bandwidth occupancy rate of the second device being less than a threshold. Correspondingly, meeting the triggering condition represents that the second device has remaining bandwidth available for transmitting the first model metadata, so as to avoid affecting the transmission of other information when transmitting the first model metadata.

In the embodiments of the present application, the triggering condition may be used individually. Certainly, in the embodiments of the present application, the triggering condition may also be used in combination to improve the success rate of the first model metadata while avoiding affecting the transmission of other information when transmitting the first model metadata.

In some implementations, the triggering condition of the first model metadata may be configured by the first device. That is to say, the method further includes: transmitting, by the first device, first configuration information to the second device, where the first configuration information is used to configure a triggering condition for triggering transmission of the first model metadata. Certainly, in the embodiments of the present application, the triggering condition of the first model metadata may also be predefined or preconfigured.

In the embodiments of the present application, the first configuration information may be transmitted when the first device fails to obtain the first model metadata. That is to say, the method further includes: in a case where the first device fails to obtain the first model metadata, transmitting, by the first device, the first configuration information to the second device. Typically, the transmission of the first model metadata can be triggered only when the first device fails to obtain the first model metadata. That is to say, the triggering condition can be used only when the first device fails to obtain the first model metadata. Therefore, transmitting the first configuration information in this case helps reduce the transmission overhead of the first configuration information. Certainly, in the embodiments of the present application, the first configuration information may also be transmitted regardless of the situation. That is to say, before transmitting the first information, the first device transmits the first configuration information to the second device regardless of whether the first device has obtained the first model metadata. That is to say, the first device may preconfigure the triggering condition of the first model metadata for the second device, so that after receiving the first information, the second device may immediately determine whether to transmit the first model metadata based on the triggering condition, thereby reducing the time delay for the first device to wait for the first model metadata.

In some implementations, the second device may first transmit the model identifier of the first model to the first device, so that the first device may determine whether matching model metadata is stored based on the model identifier of the first model. That is to say, before step S810, the method further includes: transmitting, by the second device, a model identifier of the first model to the first device.

In some scenarios, the process in which the second device transmits the model identifier of the first model to the first device may be used to trigger the model identification process for the first model. That is to say, the model identifier of the first model may be used to trigger the model identification process for the first model.

In some implementations, the second device may be a terminal device and the first device may be a network device. In this case, the second device transmitting the model identifier of the first model to the first device may occupy uplink resources, where the uplink resources may be determined based on, for example, an uplink grant (UL grant) and/or a configured grant.

In the embodiments of the present application, the triggering manner for the model identifier of the first model is not limited. In some implementations, the transmission of the model identifier of the first model is periodic. The period for transmitting the model identifier of the first model may be determined by one or more of: configured by a network device, predefined, or preconfigured.

In other implementations, the transmission of the model identifier of the first model is triggered based on an event.

In the embodiments of the present application, the event is not limited. In some implementations, the event may be associated with the busyness level of the communication system. Taking the second device being a terminal device and the first device being a network device as an example, the event may include that uplink resources are idle, or the event may include that the resource occupancy rate of uplink resources is less than a threshold, which helps reduce the impact of the transmission process of the model identifier of the first model on other uplink transmissions.

In other implementations, the event may also be associated with model deployment situation in the second device. For example, the event may include that the second device has completed model training and obtained a new first model. As another example, the event may include that the second device has obtained a new model (e.g., a first model) from a third party (e.g., an over-the-top (OTT) server).

It should be noted that the first device and/or the second device may monitor whether the event occurs. For example, if the second device monitors the occurrence of the event (e.g., an event associated with model deployment situation in the second device), the second device may transmit the model identifier of the first model to the first device. As another example, if the first device monitors the occurrence of the event (e.g., an event associated with the busyness level of the communication system), the first device may transmit indication information to the second device to indicate the second device to transmit the model identifier of the first model.

Certainly, in the embodiments of the present application, if the first device indicates the first device to transmit the model identifier of the first model via the indication information, the indication information may also indicate transmission resources for the model identifier of the first model. Certainly, in the embodiments of the present application, the information used to indicate the transmission resources and the information used to indicate the model identifier of the first model may be different information.

In other implementations, the transmission of the model identifier of the first model may also be autonomously determined by the second device. For example, after the second device completes the model training for the first model, the second device may proactively transmit the model identifier of the first model to the first device. As another example, after the second device obtains the first model from a third party (e.g., an OTT server), the second device may proactively transmit the model identifier of the first model to the first device.

It should be noted that in the embodiments of the present application, before transmitting the model identifier of the first model, the second device may request resources for transmitting the model identifier of the first model from the first device. Certainly, if the second device has already obtained or may autonomously select the resources for transmitting the model identifier of the first model, the second device may directly transmit the model identifier of the first model.

Additionally, in the embodiments of the present application, the transmission manner for the model identifier of the first model may adopt the transmission manner introduced in Embodiment 1 to reduce the overhead of transmitting the model identifier of the first model. Certainly, in the embodiments of the present application, the model identifier of the first model may be transmitted as a complete model identifier in a conventional manner.

In some implementations, a plurality of devices (including the second device) may all have the first model deployed. In this case, all of the plurality of devices will transmit the model identifier of the first model to the first device. In this case, if the first device does not store the first model metadata corresponding to the first model, the second device may select one device from the plurality of devices to report the first model metadata, so as to reduce the transmission overhead of the first model metadata. Certainly, if the above mentioned issue is not a concern, all of the plurality of devices may also report the first model metadata to improve the reliability of transmitting the first model metadata.

In some implementations, in order to reduce the time delay for the first device to obtain the first model metadata, the device that reports the model identifier of the first model may be the device among the plurality of devices that transmits the model identifier of the first model earlier (i.e., the second device). That is to say, a time at which the second device transmits the model identifier of the first model is earlier than a time at which other devices transmit the model identifier of the first model, where the other devices are devices among the plurality of devices excluding the second device.

In some implementations, in order to improve the reliability of the first device transmitting the first model metadata, the device that reports the model identifier of the first model may be the device among the plurality of devices that is closer in distance to the first device (i.e., the second device). That is to say, a distance between the second device and the first device is less than or equal to distances between other devices and the first device, where the other devices are devices among the plurality of devices excluding the second device.

In some implementations, in order to improve the reliability of the first device transmitting the first model metadata, the device that reports the model identifier of the first model may be the device among the plurality of devices that has better communication quality with the first device (i.e., the second device). That is to say, a communication quality between the second device and the first device is higher than or equal to communication qualities between other devices and the first device, where the other devices are devices among the plurality of devices excluding the second device.

In the embodiments of the present application, the second device may be selected by the first device from the plurality of devices based on the aforementioned implementations. These implementations may be used individually or in combination with each other. Certainly, the first device may also randomly select one device from the plurality of devices as the second device to transmit the first model metadata.

It should be noted that the second device may be a device that stores the first model metadata. For example, the second device may be a device deployed with the first model, and correspondingly, the second device stores the model metadata used to describe the first model (i.e., the first model metadata). Additionally, the first device may be a device that needs to identify the first model.

In the embodiments of the present application, the device types of the first device and/or the second device are not limited. For example, the second device may be a terminal device, and correspondingly, the first device may be a network device. As another example, the second device may be a network device, and correspondingly, the first device may be a terminal device. As another example, both the first device and the second device may be network devices. As yet another example, both the first device and the second device may be terminal devices.

### Embodiment 3

Currently, the industry has not specified how to determine failure of execution of a model identification process. Therefore, the first device and the second device may have different understandings of the failure of execution of model identification, leading to an increased probability of failure of execution of a model identification process.

To address the aforementioned issues, the embodiments of the present application provide a method for model identification. In the method, the failure of execution of a model identification process for the first model may be determined based on a first condition. Alternatively, as illustrated in FIG. 9, in step S910, in a case where the first condition is met, a third device determines the failure of execution of the model identification process for the first model, where the third device may include the first device and/or the second device.

It should be noted that the second device may be a device deployed with the first model, and correspondingly, the first device may be a device that needs to identify the first model. Alternatively, the second device may be a device that has identified the first model, in which case the second device may store the model identification information of the first model, and correspondingly, the first device may be a device that needs to identify the first model. Alternatively, the second device may be a device that stores the model identification information of the first model, and correspondingly, the first device may be a device that needs to identify the first model.

In the embodiments of the present application, the device types of the first device and/or the second device are not limited. For example, the second device may be a terminal device, and correspondingly, the first device may be a network device. As another example, the second device may be a network device, and correspondingly, the first device may be a terminal device. As another example, both the first device and the second device may be network devices. As yet another example, both the first device and the second device may be terminal devices.

The first condition in the embodiments of the present application is described below in combination with Examples **1** to 5.

**Example 1**: the first condition may include the first device failing to obtain part or all of the model identification information of the first model. For example, if the model identification information of the first model includes a model identifier of the first model, and correspondingly, the first condition may include the first device failing to obtain the model identifier of the first model. As another example, if the model identification information of the first model includes first model metadata, and correspondingly, the first condition includes the first device failing to obtain the first model metadata. As yet another example, if the model identification information of the first model includes the first model metadata and the model identifier of the first model, and correspondingly, the first condition includes the first device failing to obtain both the first model metadata and the model identifier of the first model.

As an example, if the first device fails to obtain the model identifier of the first model and/or the first model metadata, the first device and the second device may confirm the failure of execution of the model identification process for the first model.

In the embodiments of the present application, the reason for the first device failing to obtain the model identification information of the first model is not limited. For example, the reason may include channel quality degradation in communication between the first device and the second device. As another example, the reason may also include a large distance between the first device and the second device, resulting in transmission failure of the model identification information of the first model.

**Example 2**: the first condition includes expiration of a first timer, and the first timer is used to determine a waiting time for the first device to obtain the model identifier of the first model.

In some implementations, the first timer may be maintained by the first device, and correspondingly, if the first timer expires, the first device may consider that obtaining the model identifier of the first model has timed out. In this case, the first device may confirm the failure of execution of the model identification process for the first model.

In some implementations, if the first device confirms the failure of execution of the model identification process for the first model, the first device may transmit indication information to the second device to indicate the second device to transmit (or retransmit) the model identifier of the first model. Certainly, in the embodiments of the present application, if the first device confirms the failure of execution of the model identification process for the first model, the first device may end the model identification process.

In the embodiments of the present application, the triggering manner of the indication information is not limited. In some implementations, the indication information may be triggered based on an event, and the event may be associated with the busyness level of the communication system. Taking the first device as a network device and the second device as a terminal device as an example, the event may include that uplink resources are idle, or that the resource occupancy rate of uplink resources is less than a threshold, which helps reduce the impact of the transmission process of the model identifier of the first model on other uplink transmissions.

In some implementations, the starting of the first timer is triggered based on the first device indicating the second device to transmit the model identifier of the first model. That is to say, the method further includes: in response to the first device indicating the second device to transmit the model identifier of the first model, starting, by the first device, the first timer.

It should be noted that in the embodiments of the present application, the transmission manner of the model identifier of the first model may adopt the manner introduced in Embodiment 1 to reduce the overhead of transmitting the model identifier. Certainly, in the embodiments of the present application, the transmission manner of the model identifier of the first model may also adopt a traditional transmission manner.

**Example 3:** the first condition includes expiration of a second timer, and the second timer is used to determine a duration for which the second device waits for response information transmitted by the first device for the model identifier of the first model.

In some implementations, the response information for the model identifier of the first model may be used to indicate whether the first device has successfully received the model identifier of the first model. In other implementations, if the first model metadata adopts the transmission manner in Embodiment 2, the response information may be information used to indicate whether the second device transmits the first model metadata (e.g., the first information in Embodiment 2). For details, please refer to the introduction in the previous content.

In some implementations, the second timer may be maintained by the second device. Correspondingly, if the second timer expires, the second device may consider failure of transmission of the model identifier of the first model. In this case, the second device may confirm the failure of execution of the model identification process for the first model.

In some implementations, if the second device confirms the failure of execution of the model identification process for the first model, the second device may retransmit the model identifier of the first model to the first device. Certainly, in the embodiments of the present application, if the second device confirms the failure of execution of the model identification process for the first model, the second device may end the model identification process.

In the embodiments of the present application, the retransmission time of the model identifier of the first model is not limited. For example, the retransmission time of the model identifier of the first model may be the expiration time of the second timer. That is to say, after the second timer expires, the second device immediately transmits the model identifier of the first model. As another example, there may be a time interval 1 between the retransmission time of the model identifier of the first model and the expiration time of the second timer. That is to say, after the second timer expires, following the time interval 1, the second device retransmits the model identifier of the first model.

In some scenarios, the time interval 1 may also be referred to as "backoff time." Additionally, the time interval 1 may be determined based on one or more of the following types of information: predefined information; preconfigured information; or configuration information transmitted by a network device.

In some implementations, starting of the second timer may be triggered by the transmission of the model identifier of the first model. That is to say, the second timer is used to determine the duration from the time when the second device transmits the model identifier of the first model until the time when the second device receives response information for the model identifier of the first model.

In the embodiments of the present application, the triggering manner of the model identifier of the first model is not limited. In some implementations, for the triggering manner of the model identifier of the first model, please refer to the triggering manner of the model identifier of the first model in Embodiment 2, which will not be repeated here for the sake of brevity.

In the embodiments of the present application, the Examples 2 to 3 may be applied to a scenario where the first device fails to obtain the model identifier of the first model.

**Example 4:** the first condition includes expiration of a third timer, and the third timer is used to determine a waiting time for the first device to obtain the first model metadata.

In some implementations, the third timer may be maintained by the first device. Correspondingly, if the third timer expires, the first device may consider that obtaining the first model metadata has timed out. In this case, the first device may determine the failure of execution of the model identification process for the first model.

In some implementations, if the first device determines the failure of execution of a model identification process for the first model, the first device may transmit indication information to the second device to indicate the second device to transmit (or retransmit) the first model metadata. Certainly, in the embodiments of the present application, if the first device determines the failure of execution of a model identification process for the first model, the first device may end the model identification process.

In some implementations, the indication information may be the first information in Embodiment 2 that is used to indicate to transmit the first model metadata. For details of the indication information, please refer to the introduction of the first information in Embodiment 2. For example, the indication information may be NACK, which is used to indicate that the model identification process of the first model has not ended and that the first model metadata describing the first model needs to be further transmitted.

In other implementations, the indication information may also be the first configuration information in Embodiment 2. For details, please refer to the relevant introduction in Embodiment 2.

In other implementations, the indication information may also be the first information that is used to indicate to transmit the first model metadata in Embodiment 2. For details, please refer to the relevant introduction in Embodiment 2.

As previously described, the plurality of devices may all store the first model metadata. Therefore, if the first device confirms the failure of execution of a model identification process for the first model, the first device may reselect a device from the plurality of devices to transmit the indication information to indicate to transmit the first model metadata. The reselected device is any other device among the plurality of devices excluding the second device.

In some implementations, starting of the third timer is triggered based on one of: the first device indicating that the first model metadata is not stored; the first device indicating the second device to transmit the first model metadata (e.g., the first information in Embodiment 2); or the first device configuring, for the second device, a triggering condition for triggering transmission of the first model metadata (e.g., the first configuration information in Embodiment 2).

In the embodiments of the present application, if the first device is a network device and the second device is a terminal device, the solution of determining whether the model identification process of the first model fails based on the third timer may determine that the cause of the model identification failure may be a failure in transmitting the information used to trigger the starting of the third timer (downlink transmission), and/or a failure in transmitting the first model metadata (uplink transmission). That is to say, this solution may be used to estimate the reliability of uplink transmission and downlink transmission.

**Example 5:** the first condition includes expiration of a fourth timer, and the fourth timer is used to determine a duration for which the second device waits for response information transmitted by the first device for the first model metadata.

In some implementations, the response information for the first model metadata may be used to indicate whether the first device has successfully received the first model metadata.

In some implementations, the fourth timer is configured by the first device for the second device. For example, the first device may configure the fourth timer for the second device via first configuration information. For details of the first configuration information, please refer to the introduction in Embodiment 2. As another example, the first device may configure the fourth timer for the second device via information used to indicate to transmit the first model metadata. For details of the information used to indicate to transmit the first model metadata, please refer to the introduction in Embodiment 1.

In some implementations, the fourth timer may be maintained by the second device. Correspondingly, if the fourth timer expires, the second device may consider that the first device has timed out in obtaining the first model metadata. In this case, the second device may determine the failure of execution of a model identification process for the first model.

In some implementations, if the second device determines the failure of execution of a model identification process for the first model, the second device may transmit indication information to the first device to indicate the failure of execution of a model identification process for the first model. Certainly, in the embodiments of the present application, if the second device determines the failure of execution of a model identification process for the first model, the second device may end the model identification process.

As previously described, the plurality of devices may all store the first model. Therefore, if the second device may transmit indication information to the first device to indicate the failure of execution of the model identification process for the first model, the first device may reselect a device from the plurality of devices to perform the model device process for the first model. The reselected device may be any other device among the plurality of devices excluding the second device.

In the embodiments of the application, if the first device is a network device and the second device is a terminal device, the solution of determining whether the model identification process for the first model fails based on the fourth timer may determine that the cause of the model identification failure may be a failure in transmitting the first model metadata (uplink transmission). That is to say, this solution may be used to estimate the reliability of the uplink transmission.

In the embodiments of the present application, the Examples 4 to 5 may be applied to a scenario where the first device fails to obtain the first model metadata.

The above content, in combination with FIGS. 1 to 9, has provided a detailed description of the method embodiments of the present application. The following content, in combination with FIGS. 10 to 13, will describe the apparatus embodiments of the present application in detail. It should be understood that the description of the method embodiments corresponds to the description of the apparatus embodiments. Therefore, for parts not described in detail, reference may be made to the previous method embodiments.

FIG. 10 is a schematic diagram of a communication device of the embodiments of the present application. The communication device 1000 illustrated in FIG. 10 is a first device, and the communication device 1000 includes: a transmitting unit 1010.

The transmitting unit 1010 is configured to transmit first information to a second device, where the first information includes one of: delta information of a first model, where the delta information of the first model and reference information are used to determine model identification information of the first model; or information used to indicate whether the second device needs to transmit first model metadata, where the first model metadata is used to describe a first model.

In some implementations, the first information includes the delta information of the first model, the first device is a network device, and the second device is a terminal device.

In some implementations, the model identification information of the first model is obtained by adjusting the reference information using the delta information.

In some implementations, if the reference information includes complete model identification information of the first model, the delta information is null; or, if the reference information is null, the delta information includes complete model identification information of the first model.

In some implementations, if the delta information corresponds to partial information in the reference information, the model identification information of the first model includes the delta information, and other information in the reference information excluding the partial information.

In some implementations, if the reference information corresponds to partial information in the delta information, the model identification information of the first model includes the delta information, and the model identification information of the first model does not include the reference information.

In some implementations, if the delta information completely does not correspond to the reference information, the model identification information of the first model includes the delta information and the reference information.

In some implementations, if first partial information in the delta information corresponds to first partial information in the reference information, and second partial information in the delta information does not correspond to second partial information in the reference information, the model identification information of the first model includes the first partial information in the delta information, the second partial information in the delta information, and the second partial information in the reference information, and the model identification information of the first model does not include the first partial information in the reference information.

In some implementations, the model identification information of the first model includes a model identifier of the first model and/or the first model metadata.

In some implementations, the first information includes used to indicate whether the second device transmits the first model metadata, where if the first device stores the first model metadata, the first information is used to indicate the second device not to transmit the first model metadata; and/or if the first device does not store the first model metadata, the first information is used to indicate the second device to transmit the first model metadata.

In some implementations, the first device is a terminal device, and the second device is a network device.

In some implementations, the communication device further includes: a first receiving unit, configured to receive a model identifier of the first model transmitted by the second device.

In some implementations, the transmission of the model identifier of the first model is periodic, or transmission of the model identifier of the first model is triggered based on an event.

In some implementations, the first model metadata is stored in a plurality of devices, the plurality of devices include the second device, and the second device meets one or more of the following conditions: a time at which the second device transmits a model identifier of the first model being earlier than a time at which other devices transmit the model identifier of the first model; a distance between the second device and the first device being less than or equal to distances between other devices and the first device; or a communication quality between the second device and the first device being higher than or equal to communication qualities between other devices and the first device, where the other devices are devices among the plurality of devices excluding the second device.

In some implementations, the transmitting unit is further configured to: transmit first configuration information to the second device, where the first configuration information is used to configure a triggering condition for triggering transmission of the first model metadata.

In some implementations, the triggering condition includes one or more of: a measurement result of a received signal of the second device being greater than or equal to a measurement result threshold; or an available bandwidth of the second device being greater than or equal to a bandwidth threshold.

In some implementations, the transmitting unit is further configured to: in a case where the first device fails to obtain the first model metadata, transmit first configuration information to the second device, where the first configuration information is used to configure the triggering condition.

In some implementations, in a case where the second device stores the model identification information of the first model, failure of execution of a model identification process for the first model is determined based on a first condition.

In some implementations, the first condition includes the first device failing to obtain a model identifier of the first model; and/or the first condition includes the first device failing to obtain the first model metadata used to describe the first model.

In some implementations, the first condition includes expiration of a first timer, where the first timer is used to determine a waiting time for the first device to obtain a model identifier of the first model.

In some implementations, starting of the first timer is triggered based on the first device indicating the second device to transmit the model identifier of the first model.

In some implementations, the first condition includes expiration of a second timer, and the second timer is used to determine a duration for which the second device waits for response information transmitted by the first device for a model identifier of the first model.

In some implementations, starting of the second timer is triggered by transmission of the model identifier of the first model.

In some implementations, the first condition includes expiration of a third timer, and the third timer is used to determine a waiting time for the first device to obtain the first model metadata.

In some implementations, starting of the third timer is triggered based on one of: the first device indicating that the first model metadata is not stored; the first device indicating the second device to transmit the first model metadata; or the first device configuring, for the second device, a triggering condition for triggering transmission of the first model metadata.

In some implementations, the first condition includes expiration of a fourth timer, and the fourth timer is used to determine a duration for which the second device waits for response information transmitted by the first device for the first model metadata.

In some implementations, the fourth timer is configured by the first device for the second device.

In some implementations, the model identification process for the first model includes identifying the first model based on a model identifier of the first model and/or the first model metadata.

FIG. 11 is a schematic diagram of a communication device of the embodiments of the present application. The communication device 1100 illustrated in FIG. 11 is a second device and includes: a receiving unit 1110.

The receiving unit 1110 is configured to receive first information transmitted by a first device, where the first information includes one of: delta information of a first model, where the delta information of the first model and reference information are used to determine model identification information of the first model; or information used to indicate whether the second device needs to transmit first model metadata, where the first model metadata is used to describe a first model.

In some implementations, the first information includes the delta information of the first model, the first device is a network device, and the second device is a terminal device.

In some implementations, the model identification information of the first model is obtained by adjusting the reference information using the delta information.

In some implementations, if the reference information includes complete model identification information of the first model, the delta information is null; or, if the reference information is null, the delta information includes complete model identification information of the first model.

In some implementations, if the delta information corresponds to partial information in the reference information, the model identification information of the first model includes the delta information, and other information in the reference information excluding the partial information.

In some implementations, if the reference information corresponds to partial information in the delta information, the model identification information of the first model includes the delta information, and the model identification information of the first model does not include the reference information.

In some implementations, if the delta information completely does not correspond to the reference information, the model identification information of the first model includes the delta information and the reference information.

In some implementations, if first partial information in the delta information corresponds to first partial information in the reference information, and second partial information in the delta information does not correspond to second partial information in the reference information, the model identification information of the first model includes the first partial information in the delta information, the second partial information in the delta information, and the second partial information in the reference information, and the model identification information of the first model does not include the first partial information in the reference information.

In some implementations, the model identification information of the first model includes a model identifier of the first model and/or the first model metadata.

In some implementations, the first information includes the information used to indicate whether the second device transmits the first model metadata, where if the first device stores the first model metadata, the first information is used to indicate the second device not to transmit the first model metadata; and/or if the first device does not store the first model metadata, the first information is used to indicate the second device to transmit the first model metadata.

In some implementations, the first device is a terminal device, and the second device is a network device.

In some implementations, before the second device receives the first information transmitted by the first device, the communication device further includes: a first transmitting unit, configured to transmit a model identifier of the first model to the first device.

In some implementations, the model identifier of the first model is transmitted periodically, or the model identifier of the first model is triggered base on an event.

In some implementations, the first model metadata is stored in a plurality of devices, the plurality of devices include the second device, and the second device meets one or more of the following conditions: a time at which the second device transmits a model identifier of the first model being earlier than a time at which other devices transmit the model identifier of the first model; a distance between the second device and the first device being less than or equal to distances between other devices and the first device; or a communication quality between the second device and the first device being higher than or equal to communication qualities between other devices and the first device, where the other devices are devices among the plurality of devices excluding the second device.

In some implementations, the receiving unit is further configured to: receive first configuration information transmitted by the first device, where the first configuration information is used to configure a triggering condition for triggering the first model metadata.

In some implementations, the triggering condition includes one or more of: a measurement result of a received signal of the second device being greater than or equal to a measurement result threshold; or, an available bandwidth of the second device being greater than or equal to a bandwidth threshold.

In some implementations, the receiving unit is further configured to: in a case where the first device fails to obtain the first model metadata, receive the first configuration information transmitted by the first device, where the first configuration information is used to configure the triggering condition.

In some implementations, in a case where the second device stores the model identification information of the first model, failure of execution of a model identification process for the first model is determined based on a first condition.

In some implementations, the first condition includes the first device failing to obtain the model identifier of the first model; and/or the first condition includes the first device failing to obtain the first model metadata used to describe the first model.

In some implementations, the first condition includes expiration of a first timer, and the first timer is used to determine a waiting time for the first device to obtain a model identifier of the first model.

In some implementations, starting of the first timer is triggered based on the first device indicating the second device to transmit the model identifier of the first model.

In some implementations, the first condition includes expiration of a second timer, and the second timer is used to determine a duration for which the second device waits for response information transmitted by the first device for a model identifier of the first model.

In some implementations, starting of the second timer is triggered based on transmission of the model identifier of the first model.

In some implementations, the first condition includes expiration of a third timer, and the third timer is used to determine a waiting time for the first device to obtain the first model metadata.

In some implementations, starting of the third timer is triggered based on one of: the first device indicating that the first model metadata is not stored; the first device indicating the second device to transmit the first model metadata; or the first device configuring, for the second device, a triggering condition for triggering transmission of the first model metadata.

In some implementations, the first condition includes expiration of a fourth timer, and the fourth timer is used to determine a duration for which the second device waits for response information transmitted by the first device for the first model metadata.

In some implementations, the fourth timer is configured by the first device for the second device.

In some implementations, the model identification process for the first model includes identifying the first model based on a model identifier of the first model and/or the first model metadata.

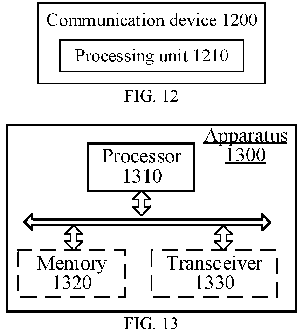

FIG. 12 is a schematic diagram of a communication device of another embodiment of the present application. The communication device 1200 illustrated in FIG. 12 may be a third device, and the third device includes: a processing unit 1210.

When a first condition is met, the processing unit 1210 is configured to determine failure of execution of a model identification process for a first model, where the third device may include a first device and/or a second device, the first device is to perform model identification on the first model, and the second device stores model identification information of the first model.

In some implementations, the first condition includes the first device failing to obtain a model identifier of the first model, and/or the first model metadata used to describe the first model.

In some implementations, the first condition includes expiration of a first timer, and the first timer is used to determine a waiting time for the first device to obtain a model identifier of the first model.

In some implementations, starting of the first timer is triggered based on the first device indicating the second device to transmit the model identifier of the first model.

In some implementations, the first condition includes expiration of a second timer, and the second timer is used to determine a duration for which the second device waits for response information transmitted by the first device for a model identifier of the first model.

In some implementations, starting of the second timer is triggered based on transmitting the model identifier of the first model.

In some implementations, the first condition includes expiration of a third timer, and the third timer is used to determine a waiting time for the first device to obtain the first model metadata.

In some implementations, starting of the third timer is triggered based on one of: the first device indicating that the first model metadata is not stored; the first device indicating the second device to transmit the first model metadata; or the first device configuring, for the second device, a triggering condition for triggering transmission of the first model metadata.

In some implementations, the first condition includes expiration of a fourth timer, and the fourth timer is used to determine a duration for which the second device waits for response information transmitted by the first device for the first model metadata.

In some implementations, the fourth timer is configured by the first device for the second device.

In some implementations, the model identification process for the first model includes identifying the first model based on a model identifier of the first model and/or the first model metadata.

In an optional embodiment, the transmitting unit 1010 may be a transceiver 1230. The communication device 1000 may further include a processor 1310 and a memory 1320, as specifically illustrated in FIG. 13.

In an optional embodiment, the receiving unit 1110 may be a transceiver 1230. The communication device 1100 may further include a processor 1310 and a memory 1320, as specifically illustrated in FIG. 13.

In an optional embodiment, the processing unit 1210 may be a processor 1310. The communication device 1200 may further include a transceiver 1330 and a memory 1320, as specifically illustrated in FIG. 13.

FIG. 13 is a schematic structural diagram of a communication apparatus of the embodiments of the present application. The dashed lines in FIG. 13 indicate that the unit or module is optional. The apparatus 1300 may be configured to implement the method described in the previous method embodiments. The apparatus 1300 may be a chip, a terminal device, or a network device.

The apparatus 1300 may include one or more processors 1310. The processor 1310 may support the apparatus 1300 in implementing the method described in the previous method embodiments. The processor 1310 may be a general-purpose processor or a dedicated processor. For example, the processor may be a central processing unit (CPU). Alternatively, the processor may also be another general-purpose processor, a digital signal processor (DSP), an application-specific integrated circuit (ASIC), a field-programmable gate array (FPGA), or other programmable logic devices, discrete gate or transistor logic devices, discrete hardware components, etc. The general-purpose processor may be a microprocessor, or the processor may also be any conventional processor, etc.

The apparatus 1300 may further include one or more memories 1320. The memory 1320 stores a program thereon, which may be executed by the processor 1310, enabling the processor 1310 to perform the method described in the previous method embodiments. The memory 1320 may be independent of the processor 1310 or integrated within the processor 1310.

The apparatus 1300 may further include a transceiver 1330. The processor 1310 may communicate with other devices or chips via the transceiver 1330. For example, the processor 1310 may transmit data to and receive data from other devices or chips via the transceiver 1330.

The embodiments of the present application further provide a computer-readable storage medium for storing a program. The computer-readable storage medium may be applied to the terminal or network device provided in the embodiments of the present application, and the program enables a computer to perform the methods performed by the terminal or network device in the various embodiments of the present application.

The embodiments of the present application further provide a computer program product. The computer program product includes a program. The computer program product may be applied to the terminal or network device provided in the embodiments of the present application, and the program enables a computer to perform the methods performed by the terminal or network device in the various embodiments of the present application.

The embodiments of the present application further provide a computer program. The computer program may be applied to the terminal or network device provided in the embodiments of the present application, and the computer program enables a computer to perform the methods performed by the terminal or network device in the various embodiments of the present application.

It should be understood that the terms "system" and "network" in the present application may be used interchangeably. Additionally, the terms used in the present application are only intended to explain specific embodiments of the present application and are not meant to limit the present application. In the specification and claims of the present application, as well as the accompanying drawings, terms such as "first," "second," "third," and "fourth" are used to distinguish between different objects and not to describe a specific order. Furthermore, the terms "include" and "have" and any variations thereof are intended to cover non-exclusive inclusion.

In the embodiments of the present application, the term "indicate/indicated/indicating/indication" may refer to a direct indication, an indirect indication, or may represent that there is an association relationship. As an example, if A indicates B, it may mean that A directly indicates B, for example, B can be acquired through A; or it may mean that A indicates B indirectly, for example, A indicates C, and B can be acquired through C; or it may mean that there is an association relationship between A and B.

In the embodiments of the present application, "B corresponding to A" means that B is associated with A, and B may be determined based on A. However, it should also be understood that determining B based on A does not mean that B is determined solely based on A; B may also be determined based on A and/or other information.

In the embodiments of the present application, the term "correspond/corresponding/correspondence" may mean that there is a direct correspondence or an indirect correspondence between two elements, or may mean that there is an association relationship between the two elements, or may mean a relationship such as indicating and being indicated, or configuring and being configured.

In the embodiments of the present application, "predefined" or "preconfigured" may be implemented by pre-storing corresponding codes, tables, or other means that may indicate relevant information in devices (e.g., including terminal devices and network devices). The present application does not limit the specific implementation method. For example, predefined may refer to what is defined in the protocol.

In the embodiments of the present application, the "protocol" may refer to standard protocols in the field of communications, such as an LTE protocol, an NR protocol, and related protocols applied in future communication systems, which are not limited in the present application.

In the embodiments of the present application, the term "and/or" herein describes an association relationship between associated objects, which indicates that there may be three kinds of relationships. For example, "A and/or B" may indicate three cases where: A exists alone, both A and B exist, and B exists alone. Additionally, a character "/" herein generally indicates that the associated objects before and after this character are in an "or" relationship.

In various embodiments of the present application, the numerical order of the above processes does not imply an order of execution. The execution order of the each process should be determined by its function and internal logic, but should not constitute any limitation on the implementation processes of the embodiments of the present application.

In the several embodiments provided by the present application, it should be understood that the disclosed system, apparatus, and method may be implemented in other ways. For example, the apparatus embodiments described above are merely illustrative. For example, the division of units is only a logical functional division, and in actual implementation, there may be other division manners. For example, multiple units or components may be combined or integrated into another system, or some features may be omitted or not executed. Additionally, the displayed or discussed mutual couplings or direct couplings or communication connections may be indirect couplings or communication connections through some interfaces, apparatuses, or units, which may be electrical, mechanical, or of other forms.

The units described as separate components may or may not be physically separate. The components displayed as units may or may not be physical units, meaning that they may be located in one place or distributed across multiple network units. Depending on actual needs, some or all of the units may be selected to achieve the objectives of the solutions of the embodiments.

Additionally, in various embodiments of the present application, each functional unit may be integrated into one processing unit, or each unit may exist physically alone, or two or more units may be integrated into one unit.

The above embodiments may be implemented in whole or in part by software, hardware, firmware, or any combination thereof. When the above embodiments are implemented by using software, they may be implemented in the form of a computer program product in whole or in part. The computer program product includes one or more computer instructions. When the computer program instructions are loaded and executed on a computer, procedures or functions according to the embodiments of the present application are generated in whole or in part. The computer may be a general-purpose computer, a dedicated computer, a computer network, or any other programmable apparatus. The computer instructions may be stored in a computer-readable storage medium or transmitted from one computer-readable storage medium to another computer-readable storage medium, for example, the computer instructions may be transmitted from a website site, computer, server, or data center to another website site, computer, server, or data center via wired (e.g., coaxial cable, optical fiber, digital subscriber line (DSL)) or wireless (e.g., infrared, radio, microwave) means. The computer-readable storage medium may be any available medium accessible to the computer, or a data storage device, such as a server or a data center that integrates one or more available media. The available medium may be a magnetic medium (e.g., a floppy disk, a hard disk, a magnetic tape), an optical medium (e.g., a digital video disc (DVD)), or a semiconductor medium (e.g., a solid state drive (SSD)), etc.

The above descriptions are merely specific implementations of the present application. However, the protection scope of the present application is not limited thereto. Any change or substitution that would be readily conceived by a person skilled in the art shall fall within the protection scope of the present application, provided that such change or substitution remains within the technical scope disclosed in the present application. Therefore, the protection scope of the present application should be subject to the protection scope of the claims.

## Claims

1. A method for transmitting model identification information, comprising:
transmitting, by a first device, first information to a second device, wherein the first information comprises one of:
delta information of a first model, wherein the delta information of the first model and reference information are used to determine model identification information of the first model; or
information used to indicate whether the second device needs to transmit first model metadata, wherein the first model metadata is used to describe a first model.

2. The method according to claim 1, wherein the first information comprises the delta information of the first model, the first device is a network device, and the second device is a terminal device.

3. The method according to claim 1 or 2, wherein the model identification information of the first model is obtained by adjusting the reference information using the delta information.

4. The method according to any one of claims 1 to 3, wherein if the reference information comprises complete model identification information of the first model, the delta information is null; or
if the reference information is null, the delta information comprises complete model identification information of the first model.

5. The method according to any one of claims 1 to 3, wherein if the delta information corresponds to partial information in the reference information, the model identification information of the first model comprises the delta information, and other information in the reference information excluding the partial information.

6. The method according to any one of claims 1 to 3, wherein if the reference information corresponds to partial information in the delta information, the model identification information of the first model comprises the delta information, and the model identification information of the first model does not comprise the reference information.

7. The method according to any one of claims 1 to 3, wherein if the delta information does not correspond to the reference information, the model identification information of the first model comprises the delta information and the reference information.

8. The method according to any one of claims 1 to 3, wherein if first partial information in the delta information corresponds to first partial information in the reference information, and second partial information in the delta information does not correspond to second partial information in the reference information, the model identification information of the first model comprises the first partial information in the delta information, the second partial information in the delta information, and the second partial information in the reference information, and the model identification information of the first model does not comprise the first partial information in the reference information.

9. The method according to any one of claims 1 to 8, wherein the model identification information of the first model comprises a model identifier of the first model and/or the first model metadata.

10. The method according to claim 1, wherein the first information comprises used to indicate whether the second device transmits the first model metadata, wherein
if the first device stores the first model metadata, the first information is used to indicate the second device not to transmit the first model metadata; and/or
if the first device does not store the first model metadata, the first information is used to indicate the second device to transmit the first model metadata.

11. The method according to claim 10, wherein the first device is a terminal device, and the second device is a network device.

12. The method according to claim 10 or 11, wherein before transmitting, by the first device, the first information to the second device, the method further comprises:
receiving, by the first device, a model identifier of the first model transmitted by the second device.

13. The method according to claim 12, wherein transmission of the model identifier of the first model is periodic, or transmission of the model identifier of the first model is triggered based on an event.

14. The method according to any one of claims 10 to 13, wherein the first model metadata is stored in a plurality of devices, the plurality of devices comprise the second device, and the second device meets one or more of the following conditions:
a time at which the second device transmits a model identifier of the first model being earlier than a time at which other devices transmit the model identifier of the first model;
a distance between the second device and the first device being less than or equal to distances between other devices and the first device; or
a communication quality between the second device and the first device being higher than or equal to communication qualities between other devices and the first device,
wherein the other devices are devices among the plurality of devices excluding the second device.

15. The method according to any one of claims 10 to 14, further comprising:
transmitting, by the first device, first configuration information to the second device, wherein the first configuration information is used to configure a triggering condition for triggering transmission of the first model metadata.

16. The method according to claim 15, wherein the triggering condition comprises one or more of:
a measurement result of a received signal of the second device being greater than or equal to a measurement result threshold; or
an available bandwidth of the second device being greater than or equal to a bandwidth threshold.

17. The method according to claim 15 or 16, further comprising:
in a case where the first device fails to obtain the first model metadata, transmitting, by the first device, the first configuration information to the second device, wherein the first configuration information is used to configure the triggering condition.

18. The method according to claim 1, wherein in a case where the second device stores the model identification information of the first model, failure of execution of a model identification process for the first model is determined based on a first condition.

19. The method according to claim 18, wherein the first condition comprises the first device failing to obtain a model identifier of the first model; and/or the first condition comprises the first device failing to obtain the first model metadata used to describe the first model.

20. The method according to claim 18 or 19, wherein the first condition comprises expiration of a first timer, and the first timer is used to determine a waiting time for the first device to obtain a model identifier of the first model.

21. The method according to claim 20, wherein starting of the first timer is triggered based on the first device indicating the second device to transmit the model identifier of the first model.

22. The method according to any one of claims 18 to 21, wherein the first condition comprises expiration of a second timer, and the second timer is used to determine a duration for which the second device waits for response information transmitted by the first device for a model identifier of the first model.

23. The method according to claim 22, wherein starting of the second timer is triggered by transmission of the model identifier of the first model.

24. The method according to any one of claims 18 to 23, wherein the first condition comprises expiration of a third timer, and the third timer is used to determine a waiting time for the first device to obtain the first model metadata.

25. The method according to claim 24, wherein starting of the third timer is triggered based on one of:
the first device indicating that the first model metadata is not stored;
the first device indicating the second device to transmit the first model metadata; or
the first device configuring, for the second device, a triggering condition for triggering transmission of the first model metadata.

26. The method according to any one of claims 18 to 25, wherein the first condition comprises expiration of a fourth timer, and the fourth timer is used to determine a duration for which the second device waits for response information transmitted by the first device for the first model metadata.

27. The method according to claim 26, wherein the fourth timer is configured by the first device for the second device.

28. The method according to any one of claims 18 to 27, wherein the model identification process for the first model comprises identifying the first model based on a model identifier of the first model and/or the first model metadata.

29. A method for transmitting model identification information, comprising:
receiving, by a second device, first information transmitted by a first device, wherein the first information comprises one of:
delta information of a first model, wherein the delta information of the first model and reference information are used to determine model identification information of the first model; or
information used to indicate whether the second device needs to transmit first model metadata, wherein the first model metadata is used to describe a first model.

30. The method according to claim 29, wherein the first information comprises the delta information of the first model, the first device is a network device, and the second device is a terminal device.

31. The method according to claim 29 or 30, wherein the model identification information of the first model is obtained by adjusting the reference information using the delta information.

32. The method according to any one of claims 29 to 31, wherein if the reference information comprises complete model identification information of the first model, the delta information is null; or
if the reference information is null, the delta information comprises complete model identification information of the first model.

33. The method according to any one of claims 29 to 31, wherein if the delta information corresponds to partial information in the reference information, the model identification information of the first model comprises the delta information, and other information in the reference information excluding the partial information.

34. The method according to any one of claims 29 to 31, wherein if the reference information corresponds to partial information in the delta information, the model identification information of the first model comprises the delta information, and the model identification information of the first model does not comprise the reference information.

35. The method according to any one of claims 29 to 31, wherein if the delta information completely does not correspond to the reference information, the model identification information of the first model comprises the delta information and the reference information.

36. The method according to any one of claims 29 to 31, wherein if first partial information in the delta information corresponds to first partial information in the reference information, and second partial information in the delta information does not correspond to second partial information in the reference information, the model identification information of the first model comprises the first partial information in the delta information, the second partial information in the delta information, and the second partial information in the reference information, and the model identification information of the first model does not comprise the first partial information in the reference information.

37. The method according to any one of claims 29 to 36, wherein the model identification information of the first model comprises a model identifier of the first model and/or the first model metadata.

38. The method according to claim 29, wherein the first information comprises the information used to indicate whether the second device transmits the first model metadata, wherein
if the first device stores the first model metadata, the first information is used to indicate the second device not to transmit the first model metadata; and/or
if the first device does not store the first model metadata, the first information is used to indicate the second device to transmit the first model metadata.

39. The method according to claim 38, wherein the first device is a terminal device, and the second device is a network device.

40. The method according to claim 38 or 39, wherein before receiving, by the second device, the first information transmitted by the first device, the method further comprises:
transmitting, by the second device, a model identifier of the first model to the first device.

41. The method according to claim 40, wherein the model identifier of the first model is transmitted periodically, or the model identifier of the first model is triggered based on an event.

42. The method according to any one of claims 38 to 41, wherein the first model metadata is stored in a plurality of devices, the plurality of devices comprise the second device, and the second device meets one or more of the following conditions:
a time at which the second device transmits a model identifier of the first model being earlier than a time at which other devices transmit the model identifier of the first model;
a distance between the second device and the first device being less than or equal to distances between other devices and the first device; or
a communication quality between the second device and the first device being higher than or equal to communication qualities between other devices and the first device,
wherein the other devices are devices among the plurality of devices excluding the second device.

43. The method according to any one of claims 38 to 42, further comprising:
receiving, by the second device, first configuration information transmitted by the first device, wherein the first configuration information is used to configure a triggering condition for triggering the first model metadata.

44. The method according to claim 43, wherein the triggering condition comprises one or more of:
a measurement result of a received signal of the second device being greater than or equal to a measurement result threshold; or
an available bandwidth of the second device being greater than or equal to a bandwidth threshold.

45. The method according to claim 43 or 44, further comprising:
in a case where the first device fails to obtain the first model metadata, receiving, by the second device, the first configuration information transmitted by the first device, wherein the first configuration information is used to configure the triggering condition.

46. The method according to claim 29, wherein in a case where the second device stores the model identification information of the first model, failure of execution of a model identification process for the first model is determined based on a first condition.

47. The method according to claim 46, wherein the first condition comprises the first device failing to obtain a model identifier of the first model; and/or the first condition comprises the first device failing to obtain the first model metadata used to describe the first model.

48. The method according to claim 46 or 47, wherein the first condition comprises expiration of a first timer, and the first timer is used to determine a waiting time for the first device to obtain a model identifier of the first model.

49. The method according to claim 48, wherein the starting of the first timer is triggered based on the first device indicating the second device to transmit the model identifier of the first model.

50. The method according to any one of claims 46 to 49, wherein the first condition comprises expiration of a second timer, and the second timer is used to determine a duration for which the second device waits for response information transmitted by the first device for a model identifier of the first model.

51. The method according to claim 50, wherein starting of the second timer is triggered based on transmission of the model identifier of the first model.

52. The method according to any one of claims 47 to 51, wherein the first condition comprises expiration of a third timer, and the third timer is used to determine a waiting time for the first device to obtain the first model metadata.

53. The method according to claim 52, wherein starting of the third timer is triggered based on one of:
the first device indicating that the first model metadata is not stored;
the first device indicating the second device to transmit the first model metadata; or
the first device configuring, for the second device, a triggering condition for triggering transmission of the first model metadata.

54. The method according to any one of claims 47 to 53, wherein the first condition comprises expiration of a fourth timer, and the fourth timer is used to determine a duration for which the second device waits for response information transmitted by the first device for the first model metadata.

55. The method according to claim 54, wherein the fourth timer is configured by the first device for the second device.

56. The method according to any one of claims 29 to 55, wherein the model identification process for the first model comprises identifying the first model based on a model identifier of the first model and/or the first model metadata.

57. A communication device, wherein the communication device is a first device and comprises:
a transmitting unit, configured to transmit first information to a second device, wherein the first information comprises one of:
delta information of a first model, wherein the delta information of the first model and reference information are used to determine model identification information of the first model; or
information used to indicate whether the second device needs to transmit first model metadata, wherein the first model metadata is used to describe a first model.

58. The communication device according to claim 57, wherein the first information comprises the delta information of the first model, the first device is a network device, and the second device is a terminal device.

59. The communication device according to claim 57 or 58, wherein the model identification information of the first model is obtained by adjusting the reference information using the delta information.

60. The communication device according to any one of claims 57 to 59, wherein if the reference information comprises complete model identification information of the first model, the delta information is null; or
if the reference information is null, the delta information comprises complete model identification information of the first model.

61. The communication device according to any one of claims 57 to 59, wherein if the delta information corresponds to partial information in the reference information, the model identification information of the first model comprises the delta information, and other information in the reference information excluding the partial information.

62. The communication device according to any one of claims 57 to 59, wherein if the reference information corresponds to partial information in the delta information, the model identification information of the first model comprises the delta information, and the model identification information of the first model does not comprise the reference information.

63. The communication device according to any one of claims 57 to 59, wherein if the delta information completely does not correspond to the reference information, the model identification information of the first model comprises the delta information and the reference information.

64. The communication device according to any one of claims 57 to 59, wherein if first partial information in the delta information corresponds to first partial information in the reference information, and second partial information in the delta information does not correspond to second partial information in the reference information, the model identification information of the first model comprises the first partial information in the delta information, the second partial information in the delta information, and the second partial information in the reference information, and the model identification information of the first model does not comprise the first partial information in the reference information.

65. The communication device according to any one of claims 57 to 64, wherein the model identification information of the first model comprises a model identifier of the first model and/or the first model metadata.

66. The communication device according to claim 57, wherein the first information comprises used to indicate whether the second device transmits the first model metadata, wherein
if the first device stores the first model metadata, the first information is used to indicate the second device not to transmit the first model metadata; and/or
if the first device does not store the first model metadata, the first information is used to indicate the second device to transmit the first model metadata.

67. The communication device according to claim 66, wherein the first device is a terminal device, and the second device is a network device.

68. The communication device according to claim 66 or 67, wherein the communication device further comprises:
a first receiving unit, configured to receive a model identifier of the first model transmitted by the second device.

69. The communication device according to claim 68, wherein transmission of the model identifier of the first model is periodic, or transmission of the model identifier of the first model is triggered based on an event.

70. The communication device according to any one of claims 66 to 69, wherein the first model metadata is stored in a plurality of devices, the plurality of devices comprise the second device, and the second device meets one or more of the following conditions:
a time at which the second device transmits a model identifier of the first model being earlier than a time at which other devices transmit the model identifier of the first model;
a distance between the second device and the first device being less than or equal to distances between other devices and the first device; or
a communication quality between the second device and the first device being higher than or equal to communication qualities between other devices and the first device,
wherein the other devices are devices among the plurality of devices excluding the second device.

71. The communication device according to any one of claims 66 to 70, wherein the transmitting unit is further configured to:
transmit first configuration information to the second device, wherein the first configuration information is used to configure a triggering condition for triggering transmission of the first model metadata.

72. The communication device according to claim 71, wherein the triggering condition comprises one or more of:
a measurement result of a received signal of the second device being greater than or equal to a measurement result threshold; or
an available bandwidth of the second device being greater than or equal to a bandwidth threshold.

73. The communication device according to claim 71 or 72, wherein the transmitting unit is further configured to:
in a case where the first device fails to obtain the first model metadata, transmit the first configuration information to the second device, wherein the first configuration information is used to configure the triggering condition.

74. The communication device according to claim 57, wherein in a case where the second device stores the model identification information of the first model, failure of execution of a model identification process for the first model is determined based on a first condition.

75. The communication device according to claim 74, wherein the first condition comprises the first device failing to obtain a model identifier of the first model; and/or the first condition comprises the first device failing to obtain the first model metadata used to describe the first model.

76. The communication device according to claim 74 or 75, wherein the first condition comprises expiration of a first timer, and the first timer is used to determine a waiting time for the first device to obtain a model identifier of the first model.

77. The communication device according to claim 76, wherein starting of the first timer is triggered based on the first device indicating the second device to transmit the model identifier of the first model.

78. The communication device according to any one of claims 74 to 77, wherein the first condition comprises expiration of a second timer, and the second timer is used to determine a duration for which the second device waits for response information transmitted by the first device for a model identifier of the first model.

79. The communication device according to claim 78, wherein starting of the second timer is triggered by transmission of the model identifier of the first model.

80. The communication device according to any one of claims 74 to 79, wherein the first condition comprises expiration of a third timer, and the third timer is used to determine a waiting time for the first device to obtain the first model metadata.

81. The communication device according to claim 80, wherein starting of the third timer is triggered based on one of:
the first device indicating that the first model metadata is not stored;
the first device indicating the second device to transmit the first model metadata; or
the first device configuring, for the second device, a triggering condition for triggering transmission of the first model metadata.

82. The communication device according to any one of claims 74 to 81, wherein the first condition comprises expiration of a fourth timer, and the fourth timer is used to determine a duration for which the second device waits for response information transmitted by the first device for the first model metadata.

83. The communication device according to claim 82, wherein the fourth timer is configured by the first device for the second device.

84. The communication device according to any one of claims 74 to 83, wherein the model identification process for the first model comprises identifying the first model based on a model identifier of the first model and/or the first model metadata.

85. A communication device, wherein the communication device is a second device and comprises:
a receiving unit, configured to receive first information transmitted by a first device, wherein the first information comprises one of:
delta information of a first model, wherein the delta information of the first model and reference information are used to determine model identification information of the first model; or
information used to indicate whether the second device needs to transmit first model metadata, wherein the first model metadata is used to describe a first model.

86. The communication device according to claim 85, wherein the first information comprises the delta information of the first model, the first device is a network device, and the second device is a terminal device.

87. The communication device according to claim 85 or 86, wherein the model identification information of the first model is obtained by adjusting the reference information using the delta information.

88. The communication device according to any one of claims 85 to 87, wherein if the reference information comprises complete model identification information of the first model, the delta information is null; or
if the reference information is null, the delta information comprises complete model identification information of the first model.

89. The communication device according to any one of claims 85 to 87, wherein if the delta information corresponds to partial information in the reference information, the model identification information of the first model comprises the delta information, and other information in the reference information excluding the partial information.

90. The communication device according to any one of claims 85 to 87, wherein if the reference information corresponds to partial information in the delta information, the model identification information of the first model comprises the delta information, and the model identification information of the first model does not comprise the reference information.

91. The communication device according to any one of claims 85 to 87, wherein if the delta information completely does not correspond to the reference information, the model identification information of the first model comprises the delta information and the reference information.

92. The communication device according to any one of claims 85 to 87, wherein if first partial information in the delta information corresponds to first partial information in the reference information, and second partial information in the delta information does not correspond to second partial information in the reference information, the model identification information of the first model comprises the first partial information in the delta information, the second partial information in the delta information, and the second partial information in the reference information, and the model identification information of the first model does not comprise the first partial information in the reference information.

93. The communication device according to any one of claims 85 to 92, wherein the model identification information of the first model comprises a model identifier of the first model and/or the first model metadata.

94. The communication device according to claim 85, wherein the first information comprises the information used to indicate whether the second device transmits the first model metadata, wherein
if the first device stores the first model metadata, the first information is used to indicate the second device not to transmit the first model metadata; and/or
if the first device does not store the first model metadata, the first information is used to indicate the second device to transmit the first model metadata.

95. The communication device according to claim 94, wherein the first device is a terminal device, and the second device is a network device.

96. The communication device according to claim 94 or 95, wherein before receiving, by the second device, the first information transmitted by the first device, the communication device further comprises:
a first transmitting unit, configured to transmit a model identifier of the first model to the first device.

97. The communication device according to claim 96, wherein the model identifier of the first model is transmitted periodically, or the model identifier of the first model is triggered based on an event.

98. The communication device according to any one of claims 94 to 97, wherein the first model metadata is stored in a plurality of devices, the plurality of devices comprise the second device, and the second device meets one or more of the following conditions:
a time at which the second device transmits a model identifier of the first model being earlier than a time at which other devices transmit the model identifier of the first model;
a distance between the second device and the first device being less than or equal to distances between other devices and the first device; or
a communication quality between the second device and the first device being higher than or equal to communication qualities between other devices and the first device,
wherein the other devices are devices among the plurality of devices excluding the second device.

99. The communication device according to any one of claims 94 to 98, wherein the receiving unit is further configured to:
receive first configuration information transmitted by the first device, wherein the first configuration information is used to configure a triggering condition for triggering the first model metadata.

100. The communication device according to claim 99, wherein the triggering condition comprises one or more of:
a measurement result of a received signal of the second device being greater than or equal to a measurement result threshold; or
an available bandwidth of the second device being greater than or equal to a bandwidth threshold.

101. The communication device according to claim 99 or 100, wherein the receiving unit is further configured to:
in a case where the first device fails to obtain the first model metadata, receive the first configuration information transmitted by the first device, wherein the first configuration information is used to configure the triggering condition.

102. The communication device according to claim 85, wherein in a case where the second device stores the model identification information of the first model, failure of execution of a model identification process for the first model is determined based on a first condition.

103. The communication device according to claim 102, wherein the first condition comprises the first device failing to obtain a model identifier of the first model; and/or the first condition comprises the first device failing to obtain the first model metadata used to describe the first model.

104. The communication device according to claim 102 or 103, wherein the first condition comprises expiration of a first timer, and the first timer is used to determine a waiting time for the first device to obtain a model identifier of the first model.

105. The communication device according to claim 104, wherein starting of the first timer is triggered based on the first device indicating the second device to transmit the model identifier of the first model.

106. The communication device according to any one of claims 102 to 105, wherein the first condition comprises expiration of a second timer, and the second timer is used to determine a duration for which the second device waits for response information transmitted by the first device for a model identifier of the first model.

107. The communication device according to claim 106, wherein starting of the second timer is triggered based on transmission of the model identifier of the first model.

108. The communication device according to any one of claims 102 to 107, wherein the first condition comprises expiration of a third timer, and the third timer is used to determine a waiting time for the first device to obtain the first model metadata.

109. The communication device according to claim 108, wherein starting of the third timer is triggered based on one of:
the first device indicating that the first model metadata is not stored;
the first device indicating the second device to transmit the first model metadata; or
the first device configuring, for the second device, a triggering condition for triggering transmission of the first model metadata.

110. The communication device according to any one of claims 102 to 109, wherein the first condition comprises expiration of a fourth timer, and the fourth timer is used to determine a duration for which the second device waits for response information transmitted by the first device for the first model metadata.

111. The communication device according to claim 110, wherein the fourth timer is configured by the first device for the second device.

112. The communication device according to any one of claims 85 to 111, wherein the model identification process for the first model comprises identifying the first model based on a model identifier of the first model and/or the first model metadata.

113. A communication device, comprising a transceiver, a memory, and a processor, wherein the memory is configured to store a program, and the processor is configured to invoke the program in the memory and control the transceiver to receive or transmit a signal, to enable the communication device to perform the method according to any one of claims 1 to 56.

114. An apparatus, comprising a processor, configured to invoke a program from a memory, to enable the apparatus to perform the method according to any one of claims 1 to 56.

115. A chip, comprising a processor, configured to invoke a program from a memory, to enable a device equipped with the chip to perform the method according to any one of claims 1 to 56.

116. A computer-readable storage medium, having stored thereon a program, wherein the program enables a computer to perform the method according to any one of claims 1 to 56.

117. A computer program product, comprising a program, wherein the program enables a computer to perform the method according to any one of claims 1 to 56.

118. A computer program, wherein the computer program enables a computer to perform the method according to any one of claims 1 to 56.
